(19) Europäisches Patentamt / European Patent Office / Office européen des brevets

(11) **EP 3 245 555 B1**

(12) **FASCICULE DE BREVET EUROPEEN**

(45) Date de publication et mention de la délivrance du brevet:
**17.09.2025 Bulletin 2025/38**

(21) Numéro de dépôt: **16703340.6**

(22) Date de dépôt: **14.01.2016**

(51) Classification Internationale des Brevets (IPC):
**G02C 7/02** *(2006.01)*     **G02C 7/10** *(2006.01)*

(52) Classification Coopérative des Brevets (CPC):
**G02C 7/027; G02C 7/10**

(86) Numéro de dépôt international:
**PCT/FR2016/050065**

(87) Numéro de publication internationale:
**WO 2016/113506 (21.07.2016 Gazette 2016/29)**

(54) **PROCEDE DE DETERMINATION D'UN FILTRE POUR UNE LENTILLE OPHTALMIQUE ET LENTILLE OPHTALMIQUE COMPORTANT UN TEL FILTRE**

VERFAHREN ZUR BESTIMMUNG EINES FILTERS FÜR EINE OPHTHALMISCHE LINSE UND OPHTHALMISCHE LINSE MIT SOLCH EINEM FILTER

METHOD FOR DETERMINING A FILTER FOR AN OPHTHALMIC LENS AND OPHTHALMIC LENS COMPRISING SUCH A FILTER

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **16.01.2015 FR 1550383**

(43) Date de publication de la demande:
**22.11.2017 Bulletin 2017/47**

(73) Titulaire: **Essilor International**
**94220 Charenton-le-Pont (FR)**

(72) Inventeurs:
• **SCHERLEN, Anne-Catherine**
**94220 Charenton-le-Pont (FR)**
• **LONGO, Adèle**
**94220 Charenton-le-Pont (FR)**

(74) Mandataire: **Jacobacci Coralis Harle**
**32, rue de l'Arcade**
**75008 Paris (FR)**

(56) Documents cités:
WO-A1-01/82791     WO-A1-2013/021102
WO-A1-2014/079574     WO-A1-2014/147067
WO-A1-2014/174067     US-A1- 2012 307 194

• STRINGHAM JAMES M. ET AL: "Macular Pigment and Visual Performance in Glare: Benefits for Photostress Recovery, Disability Glare, and Visual Discomfort", INVESTIGATIVE OPTHALMOLOGY & VISUAL SCIENCE, vol. 52, no. 10, 22 September 2011 (2011-09-22), US, pages 7406, XP055862326, ISSN: 1552-5783, DOI: 10.1167/iovs.10-6699

• ROSENBLUM Y Z ET AL: "SPECTRAL FILTERS IN LOW-VISION CORRECTION", OPHTHALMIC AND PHYSIOLOGICAL OPTICS, PERGAMON PRESS, OXFORD, GB, vol. 20, no. 4, 1 July 2000 (2000-07-01), pages 335 - 341, XP001004552, ISSN: 0275-5408, DOI: 10.1016/S0275-5408(00)00006-5

# EP 3 245 555 B1

**Description**

DOMAINE TECHNIQUE AUQUEL SE RAPPORTE L'INVENTION

La présente invention concerne de manière générale le domaine de l'optique ophtalmique.

Elle concerne plus particulièrement un procédé de détermination d'un filtre pour une lentille ophtalmique destinée à être placée devant l'œil d'un porteur, ledit filtre étant apte à améliorer ou à maintenir le confort visuel et/ou les performances visuelles dudit porteur.

ARRIERE-PLAN TECHNOLOGIQUE

Il existe des solutions permettant de prescrire à un porteur de lunettes une ou des lentilles ophtalmiques équipées de filtres.

Par exemple, dans le domaine des filtres thérapeutiques, on peut proposer à un porteur différents filtres ou types de filtre en fonction de sa pathologie (cataracte, dégénérescence maculaire, ...).

La détermination du ou des filtres se fait généralement de manière très empirique, par des tests subjectifs en essayant sur le porteur différentes lentilles ophtalmiques équipées de filtres et en ne retenant que le ou les filtres apportant le plus d'amélioration (voir par exemple Rosenblum et al., « Spectral filters in low-vision correction », Ophthalmic Physiol. Opt. 20 (4), pp. 335-341, 2000).

De tels filtres permettant d'améliorer la vision du contraste et/ou de réduire l'éblouissement en fonction des pathologies sont par exemple proposés par le laboratoire ophtalmique Verbal dans la gamme de lentilles CPF (http://www.verbal.fr/fr/optique-basse-vision).

Le document WO2014/079574A1 décrit un procédé de réduction de l'intensité lumineuse d'au moins un objet perceptible par un porteur de lunettes.

Il existe également des solutions permettant de corriger une déficience de la vision des couleurs par le porteur. Le document WO 2001/057583 décrit par exemple une méthode selon laquelle on détermine la réponse spectrale du porteur et on réalise un filtre qui rétablit une vision des couleurs proche de la vision d'un œil normal.

Les procédés de détermination des filtres sont basés sur des méthodes qui sont donc :

- soit subjectives et ne permettent pas d'optimiser le choix des caractéristiques du filtre,
- soit objectives mais limitées au rétablissement d'une vision des couleurs.

Lors de la détermination d'un filtre, le porteur est souvent confronté à des compromis entre plusieurs critères qu'il doit considérer : variétés d'environnement lumineux, exigence visuelle associée, etc....

Les procédés de détermination connus ne permettent pas alors de prendre en compte objectivement la sensibilité du sujet aux caractéristiques d'un environnement lumineux afin de déterminer le filtre destiné à être placé devant l'œil du porteur.

OBJET DE L'INVENTION

Afin de remédier à l'inconvénient précité de l'état de la technique, la présente invention propose un procédé de détermination tel que défini en revendication 1.

Ainsi, grâce au procédé selon l'invention, la sensibilité du porteur aux caractéristiques de l'environnement lumineux est déterminée objectivement, afin de paramétrer au moins une caractéristique optique du filtre pour optimiser les performances visuelles ou le confort visuel du porteur dans une tâche donnée.

Ces performances visuelles et le confort visuel peuvent être limités à la fois par la sensibilité du porteur au flux lumineux caractéristique, et à la fois par les caractéristiques mêmes du filtre.

Selon la précision visuelle exigée par le porteur et sa capacité à gérer les caractéristiques des flux lumineux, on adaptera spécifiquement les paramètres du filtre.

La sensibilité de l'œil du porteur peut dépendre du flux lumineux caractéristique, de la physiologie du système visuel du porteur, et de l'impact fonctionnel d'un flux lumineux donné sur les performances visuelles.

La complexité de la détermination du filtre réside dans le fait que cette sensibilité à la lumière de l'œil du porteur est dépendante à la fois :

- des caractéristiques du flux lumineux caractéristiques,
- de la physiologie du système visuel du porteur, et
- de l'impact fonctionnel d'un flux lumineux gênant sur les performances visuelles ou le confort visuel du porteur dans une tâche visuelle donnée.

Selon un des aspects de l'invention, le flux lumineux caractéristique correspond :

- soit à un flux lumineux « réel » auquel est soumis le porteur dans la tâche donnée ; en d'autres termes le flux lumineux caractéristique est caractéristique de l'environnement lumineux ambiant dans lequel le porteur se retrouvera pour la réalisation de la tâche visuelle ;
- soit à un flux lumineux « artificiel » en ce sens qu'il reproduit au moins partiellement le flux lumineux auquel sera soumis le porteur, et est représentatif d'au moins une source lumineuse d'inconfort visuel ou de perte de performances visuelles pour le porteur.

Selon un autre aspect de l'invention, le flux lumineux caractéristique est déterminé à partir d'un questionnaire comportant une ou plusieurs questions posées au porteur sur les différentes caractéristiques des flux lumineux auxquels il est ou sera confronté, et pour lesquels un inconfort visuel ou une perte de performances visuelles est rapporté.

Selon un autre aspect de l'invention dans le procédé de détermination, ladite étape de mesure de la grandeur représentative de la sensibilité de l'œil du porteur au flux lumineux caractéristique comprend :

- une étape de soumission du porteur audit flux lumineux caractéristique, et
- une étape de caractérisation dudit flux lumineux caractéristique,

la mesure de ladite grandeur représentative étant réalisée sur le porteur soumis audit flux lumineux caractéristique.

Ainsi, l'étape de soumission du porteur correspond soit à la mise en situation du porteur dans l'environnement lumineux dans lequel il sera susceptible d'effectuer une certaine tâche visuelle, soit à la reproduction, au moins partielle, de cet environnement lumineux par un flux lumineux caractéristique contrôlé de manière à se rapprocher au plus près de la situation réelle du porteur.

Selon un aspect de l'invention, il est alors prévu, lors de l'étape de caractérisation du procédé, de caractériser le flux lumineux caractéristique.

Lorsque le flux lumineux caractéristique est représentatif de l'environnement lumineux réel dans lequel est le porteur, la caractérisation peut comprendre la détermination de la source ou des sources principales de gêne lumineuse auxquelles est soumis le porteur.

Selon une autre mise en œuvre du procédé de détermination, ladite étape de mesure de la grandeur représentative de la sensibilité de l'œil du porteur au flux lumineux caractéristique comprend :

- une étape de soumission du porteur à un questionnaire permettant d'apprécier la sensibilité du porteur audit flux lumineux caractéristique,
- une étape de collecte des réponses du porteur audit questionnaire,

la mesure de ladite grandeur représentative étant réalisée à partir desdites réponses du porteur au questionnaire,

De manière avantageuse, l'étape de caractérisation du flux lumineux caractéristique consiste en la mesure d'au moins l'une des grandeurs suivantes :

- la distribution spatiale dudit flux lumineux caractéristique,
- la distribution angulaire dudit flux lumineux caractéristique,
- le spectre dudit flux lumineux caractéristique, et
- l'intensité dudit flux lumineux caractéristique,

Lorsque le flux lumineux caractéristique est issu d'une ou plusieurs sources lumineuses, la distribution spatiale dudit flux lumineux caractéristique correspond, par exemple, à la donnée de l'étendue spatiale de la ou des sources (source ponctuelle, source étendue). La distribution angulaire quant à elle correspond, par exemple, à la donnée du diagramme angulaire d'émission (source directive/collimatée, source non directive, etc...).

Anatomiquement et physiologiquement, plusieurs composantes de l'œil du porteur interagissent dans la gestion du flux lumineux caractéristique. Afin de déterminer le filtre adéquat, il est utile de tenir compte de l'ensemble des caractéristiques physiologiques de l'œil du porteur et/ou des structures connexes des yeux prenant en charge ce flux lumineux (analyse multiparamétrique). En fonction de la capacité ou de la fragilité de cet œil, le filtre déterminé devra soulager ledit œil de la composante lumineuse non gérée de manière optimale ou adéquate pour un état donné de l'œil.

On comprendra par ailleurs que pour caractériser ledit flux lumineux caractéristique il est possible de prévoir un ensemble de capteurs, tels que spectromètres, luxmètres, etc..., permettant de mesurer les propriétés optiques et photométriques des sources lumineuses dans l'environnement du porteur.

Il est également possible de déterminer par simulation ou calcul optiques les caractéristiques dudit flux lumineux caractéristique, par exemple *via* la connaissance des courbes théoriques de réponse des sources lumineuses.

Dans une autre étape du procédé, on réalise des mesures relatives à l'un ou aux deux yeux du porteur soumis au flux lumineux caractéristique.

Plus précisément, on mesure une grandeur représentative d'une sensibilité de l'œil du porteur audit flux lumineux caractéristique.

Avantageusement, ladite grandeur représentative de la sensibilité de l'œil du porteur audit flux lumineux caractéristique correspond à une sensibilité à la lumière dudit porteur.

Par « sensibilité à la lumière » du porteur, on entend toute réaction ou modification d'un confort ou d'une performance visuelle plus ou moins intense et prolongée liée à un flux ou stimuli lumineux temporaires ou continus.

La grandeur représentative de la sensibilité de l'œil du porteur audit flux lumineux caractéristique est une grandeur de mesure objective physiologique du porteur.

La grandeur représentative de la sensibilité de l'œil du porteur peut être de plus en lien avec une grandeur de mesure objective physique du porteur et/ou une grandeur de mesure subjective liée à la perception ou à l'expression du porteur.

Par « grandeur de mesure objective physiologique » du porteur, on entend toutes valeurs relatives à la mesure d'au moins un paramètre ou d'au moins une caractéristique lié à l'intégrité et au fonctionnement d'une composante du système oculaire ou des structures connexes à ce système. Le choix d'une telle grandeur représentative permet d'évaluer les capacités physiologiques de l'œil ou des éléments connexes à traiter un ensemble ou une partie des caractéristiques du flux lumineux caractéristique. Cette analyse permet d'identifier les conditions ou situations à partir desquelles le porteur ne pourra pas gérer naturellement le flux lumineux. La prescription d'un filtre permettra alors de compenser la perte de vision et/ou de confort visuel associée.

Par « grandeur de mesure objective physique » du porteur, on entend toute valeur relative à la mesure d'un moins un paramètre caractéristique d'un état de la structure et des fonctions oculaires ou des structures connexes par une mesure optique et/ou photométrique. L'ajout d'une instrumentation physique permet de caractériser et de quantifier de manière inférentielle une composante de la structure oculaire ou connexe. Le choix d'une telle grandeur représentative permet de quantifier par une mesure physique les capacités et les performances d'une ou plusieurs structures oculaires ou connexes en lien avec les processus d'éblouissement. Selon la structure étudiée et les résultats obtenus, on orientera différemment les caractéristiques du filtre pour optimiser le confort et ou les performances visuelles selon la ou les fragilités de la structure oculaire et connexe considérée.

Par « grandeur de mesure subjective liée à la perception ou à l'expression » du porteur, on entend toutes les réponses verbales exprimées par le porteur à travers soit un questionnaire ou à des questions en lien avec des tests réalisés dans lequel le porteur doit exprimer ce qu'il a perçu ou ressenti visuellement. Le choix d'une telle grandeur représentative permet de déterminer subjectivement des performances visuelles et ou des inconforts visuels ressentis et exprimés par le porteur. Cette évaluation permet de définir les conditions ou situations dans lesquels le porteur obtient une performance visuelle optimale/ou un confort optimal et également les conditions d'inconfort et de perte de performance visuelle.

La grandeur représentative de la sensibilité de l'œil du porteur au flux lumineux caractéristique est choisie parmi l'une au moins des grandeurs suivantes :

- le coefficient de diffusion intraoculaire de l'œil du porteur,
- la densité du pigment maculaire de l'œil du porteur.

La grandeur représentative de la sensibilité de l'œil du porteur peut être en plus en lien avec le seuil de modification du confort visuel et/ou des performances visuelles exprimé ou mesuré.

Le coefficient de diffusion intraoculaire de l'œil du porteur correspond à la propriété qu'a la lumière à se disperser dans toutes les directions d'une structure physique. Les effets de diffusion peuvent être provoqués dans l'œil par toutes les surfaces optiques (des larmes, de la cornée, de l'humeur aqueuse, de l'iris, du cristallin et même du corps vitré). Selon la structure de l'œil du porteur et selon la place de la lumière utilisée pour caractériser cette mesure, la valeur du coefficient de diffusion sera plus ou moins importante.

Cette diffusion ou absorption intraoculaire est liée à la perte de transparence de la structure oculaire, entraînant une diffusion de la lumière dans l'œil du porteur. Cette diffusion augmente avec l'âge et est dépendante de la longueur d'onde et de l'orientation de la cible lumineuse. Elle induit un voile, un étalement de la lumière arrivant sur la rétine impliquant entre autre un éblouissement d'incapacité visuelle (perte de vision) et un inconfort plus important.

En effet, l'image formée sur la rétine n'est pas ponctuelle. Un étalement et une dispersion du flux lumineux implique une image floue et diffuse impactant plusieurs fonctions visuelles, telles la vision des couleurs, la sensibilité aux contrastes, ou encore l'acuité visuelle.

La densité du pigment maculaire de l'œil du porteur correspond à la densité optique de trois caroténoïdes, constituant le pigment maculaire : la lutéine, la zéaxanthine et de la mésozéaxanthine. Ces molécules ne sont pas synthétisées par l'organisme donc leurs apports proviennent seulement de l'alimentation. Ces caroténoïdes sont situés localement sur la partie maculaire de la rétine, et plus précisément au niveau des axones des photorécepteurs et dans la couche plexiforme interne. Au niveau cellulaire, la lutéine serait plus liée aux bâtonnets et la zéaxanthine aux cônes.

Ce pigment maculaire, qui est situé au niveau de la zone maculaire de l'œil du porteur, a une fonction protectrice contre la lumière bleue photo-toxique comprise entre 430 et 480 nanomètres.

Il a également un rôle dans la réduction de la gêne à la lumière (temps de récupération). La concentration de ce pigment maculaire diminue avec l'âge et en présence de pathologie rétinienne. Une description plus précise du rôle de ce pigment est décrite dans l'exemple 2 ci-après.

Par « seuil exprimé ou mesuré de modification du confort visuel et/ou des performances visuelles », on comprend toute évolution ou baisse des performances visuelles optimales pouvant être subi par le porteur toutes conditions confondues, qu'elle concerne la capacité visuelle ou le confort subjectif d'un porteur. Le seuil exprimé dépend de chaque sujet (de sa performance initiale) et est à pondérer avec les activités du porteur, à savoir les exigences de vision et de confort souhaité.

En effet, un excès d'illumination rétinienne sature le fonctionnement rétinien. Cette saturation engendre un inconfort visuel, voire une douleur, et également une incapacité visuelle dans le cas du blanchiment des photorécepteurs (éblouissement aveuglant). Un temps de récupération est nécessaire pour retrouver un confort et/ou une performance correspondant à la régénération à nouveau des pigments des photorécepteurs.

Les paramètres influençant cet éblouissement dépendent des caractéristiques du flux lumineux présent dans l'environnement lumineux du porteur et des caractéristiques de l'oeil du porteur, telles que par exemple le diamètre de la pupille, ou la diffusion des structures oculaires (cornée, cataracte, épithélium pigmentaire, ...).

Le flux lumineux peut impacter différemment les performances visuelles selon les porteurs (variabilités entre les sujets). Le filtre devra donc être déterminé pour préserver au mieux les performances visuelles. Pour cela, il est utile d'évaluer l'impact du flux lumineux caractéristiques sur les performances visuelles.

Ainsi, le procédé peut comporter en outre une étape d'évaluation de l'impact dudit flux lumineux caractéristique sur les performances visuelles du porteur lors de laquelle on réalise au moins l'une des mesures suivantes sur le porteur :

- l'acuité visuelle : capacité à discriminer un opto-type sous le plus petit angle, telle que décrite dans l'ouvrage BORISH'S CLINICAL REFRACTION, (Butterworth-Heinemann; 2nd Edition, October 27, 2006),
- la sensibilité aux contrastes : capacités du système visuel à détecter des différences de luminance sur des éléments de dimensions variées, statiques (contraste spatial de luminance), ou dynamiques (contraste temporel de luminance), voir par exemple Sidorova et al., (« Functional acuity contrast sensitivity assessment in young and middle age healthy persons at the day time with and without glare », Acta Medica Lituanica, Vol. 21, No. 1, 2014)
- le champ de vision qui correspond à l'étendue de l'espace que perçoit l'oeil du porteur quand il est fixe et regarde face à lui (*BORISH'S CLINICAL REFRACTION, op. cit.*),
- la perception des couleurs, c'est-à-dire la perception visuelle de la répartition spectrale de la lumière visible. Cette sensation prend son origine dans la stimulation de cellules nerveuses spécialisées nommées cônes et situées sur la rétine (*op. cit.*),
- la perception des distances et des profondeurs. La perception de la profondeur est la capacité visuelle à percevoir le monde en trois dimensions et à discriminer la position d'un objet par rapport à un autre (*op. cit.*),
- le mouvement de paupière qui se caractérise par une fermeture complète ou partielle des paupières, ainsi que des tremblements de paupières suite à une activité musculaire supérieure à celle en position de repos. L'activité musculaire peut être évaluée par son activité électrique (électromyogramme), voir par exemple Murray et al. (« The ocular stress monitor: a new device for measuring discomfort glare », Lighting Research and Technology, September 2002, 34:240),
- le diamètre pupillaire : taille de l'orifice circulaire situé au centre de l'iris et permettant, par sa contraction ou sa dilatation, de doser la quantité de lumière qui pénètre dans l'œil (cf. Alexandridis E., « The Pupil ». Springer; 1985),
- l'inconfort visuel sur une échelle d'inconfort : gêne ou malaise éprouvé par rapport à une sensation suite à des stimuli lumineux intenses (Mainster et al., « Glare's causes, consequences, and clinical challenges after a century of ophthalmic study ». Am. J. Ophthalmol., 153 (4), pp. 587-593. 2012), et
- le temps de récupération après éblouissement : temps nécessaire à la récupération de tout ou partie des fonctions qui ont été dégradées pendant un éblouissement (Shieber, « Age and Glare Recovery Time for Low-Contrast Stimuli Effect of glare on reaction time for peripheral vision at mesopic adaptation »; Proceedings of the Human Factors and Ergonomics Society Annual Meeting October 1994, 38:496-499).

L'inconfort visuel est défini comme une sensation subjective de non-confort visuel liée à la quantité, à la distribution et à la qualité de la lumière reçue. L'échelle d'inconfort visuel correspond à une gradation progressive de l'expression de son inconfort visuel selon différents critères (Gellatly and Weintraub, « User reconfigurations of the de boer rating for discomfort glare », 1990).

Le seuil d'éclairement rétinien correspond à la quantité de luminance reçue par la rétine d'un objet ou d'une scène par l'intermédiaire de la pupille. L'exposition à une luminance intense entraîne un dysfonctionnement rétinien qui serait la conséquence de désordres photochimiques au niveau des photorécepteurs, de l'épithélium pigmentaire et des cellules bipolaires. Ces désordres entraînent une baisse de performance visuelle et ou d'inconfort visuel. Le seuil d'éclairement rétinien de confort ou de performance visuelle correspond ainsi au niveau minimum de luminance qui n'entraîne pas de dysfonctionnement rétinien.

Dans un autre mode de réalisation, la grandeur représentative de la sensibilité au flux lumineux caractéristique de l'œil du porteur est déterminée en fonction du coefficient de diffusion intraoculaire mesuré à différentes longueurs d'onde. Dans ce cas, on ajuste alors le taux d'absorption et/ou la réponse spectrale du filtre en fonction du coefficient de diffusion intraoculaire.

Dans un autre mode de réalisation, la grandeur représentative de la sensibilité de l'œil du porteur au flux lumineux caractéristique est déterminée en fonction de la densité et/ou de la répartition du pigment maculaire.

Dans un mode de réalisation particulier, la mesure de la grandeur représentative de la sensibilité de l'œil du porteur au flux lumineux caractéristique est réalisée au moyen d'un filtre-test placé devant l'œil porteur, dont on fait varier le taux d'absorption et/ou la réponse spectrale.

Dans un mode de réalisation préféré, ladite au moins une caractéristique optique du filtre déterminée lors de l'étape de détermination consiste en :

- le taux d'absorption dudit filtre,
- la réponse spectrale dudit filtre,
- la répartition spatiale de ces caractéristiques sur ladite lentille ophtalmique.

Le taux d'absorption du filtre peut être mesuré en utilisant la méthode décrite par exemple dans la norme ISO 8980-3:2003 « *Transmittance specification and test methods »*.

La réponse spectrale du filtre peut quant à elle correspondre à la réflectance $R(\lambda)$ ou à la transmittance $T(\lambda)$, par exemple mesurées au moyen d'un spectromètre utilisant un illuminant standardisé D65.

De manière avantageuse, la caractéristique optique du filtre déterminée lors de l'étape de détermination du procédé est l'atténuation sélective du filtre, cette atténuation sélective étant proportionnelle à la grandeur représentative de la sensibilité au flux lumineux caractéristique de l'œil du porteur mesurée lors de l'étape de mesure.

Dans un mode de réalisation particulier, la caractéristique optique du filtre est déterminée également en fonction d'un indicateur sur le flux lumineux et/ou du besoin visuel auquel sera soumis le porteur dans ses activités.

Lorsque la grandeur représentative de la sensibilité de l'œil du porteur au flux lumineux caractéristique est en lien avec la densité et/ou la répartition du pigment maculaire, on détermine, lors de l'étape de détermination, la réponse spectrale du filtre comme étant conforme à la courbe d'absorption du pigment maculaire en fonction de la longueur d'onde.

De cette façon, il est possible grâce au filtre déterminé selon ce procédé de compenser les effets d'une diminution de la densité de ce pigment ou bien de pallier une répartition inhomogène de celui-ci dans l'œil du porteur.

De manière avantageuse, on détermine alors la réponse spectrale du filtre de sorte que le système formé par le filtre et l'œil du porteur présente une transmission spectrale proche de la transmission spectrale d'un œil de référence.

Dans un autre mode de réalisation, on détermine, lors de l'étape de détermination, le taux d'absorption du filtre et/ou la réponse spectrale du filtre, de sorte que, lorsque le porteur est soumis à un flux lumineux prédéterminé, l'éclairement rétinien $E_{ret}$ reçu par l'œil du porteur est inférieur, pour au moins une longueur d'onde, à un seuil d'éclairement rétinien au-delà duquel le confort visuel et/ou les performances visuelles dudit porteur sont dégradés.

Ce seuil d'éclairement rétinien correspond à l'illumination rétinienne et est proportionnel au produit de la luminance $L_{sou}$ de la source et de l'aire pupillaire $A_{pup}$. Cette quantité $L_{sou}$ x $A_{pup}$ définit un niveau rétinien dont l'unité est le Troland (Td).

Il peut être mesuré en utilisant la formule suivante (Damelincourt et al., « Éclairage d'intérieur et ambiances visuelles », Lavoisier, 2010, ISBN 2743019115, 9782743019112) :

$$E = \frac{\pi}{4} \times d^2 \times L \ ,$$

où d est le diamètre de la pupille qui dépend de la luminance de la cible mais aussi de sa composante spectrale. Pour cela, il est nécessaire de calculer l'éclairement rétinien en prenant en compte à la fois l'intensité et la composante spectrale de la source : $\int I * \lambda$.

Enfin, dans une mise en œuvre particulièrement avantageuse du procédé de l'invention, il est prévu de répéter une ou plusieurs fois les étapes de soumission, de caractérisation, et de mesure avec un autre flux lumineux caractéristique et de déterminer au moins une autre caractéristique optique du filtre destiné au porteur.

De cette façon, il est alors possible de tenir compte de toutes les sources lumineuses susceptibles de gêner un porteur dans l'optimisation du filtre.

Le procédé selon l'invention trouve une application particulièrement avantageuse dans la conception de filtre pour lentille ophtalmique.

Ainsi, l'invention permet également d'obtenir un filtre pour une lentille ophtalmique destinée à être placée devant l'œil d'un porteur, ledit filtre étant déterminé grâce au procédé conforme à l'invention, de manière à améliorer ou à maintenir le confort visuel et/ou les performances visuelles dudit porteur.

Dans un mode de réalisation particulier, le filtre est un filtre actif de type électrochrome ou photochrome.

Dans un autre mode de réalisation, ce filtre est un filtre passif choisi parmi un ensemble de filtres prédéterminés, de sorte que la caractéristique optique déterminée du filtre est proche de la même caractéristique optique du filtre prédéterminé choisi.

DESCRIPTION DETAILLEE D'UN EXEMPLE DE REALISATION

On propose plus précisément de détailler ci-après quatre exemples de procédé de détermination d'un filtre conforme à l'invention, deux exemples (n°1 et n°2) couverts au moins par la revendication indépendante et trois autres exemples (n°3, n°4 et n°5) couverts par les revendications dépendantes, dans lesquels :

- l'exemple n°1 concerne la détermination d'un filtre en fonction du coefficient de diffusion de l'œil du porteur à différentes longueurs d'onde ;
- l'exemple n°2 concerne la détermination d'un filtre en fonction de la densité du pigment maculaire de l'œil du porteur ;
- l'exemple n°3 concerne la détermination d'un filtre en fonction du cône de prescription ; et
- l'exemple n°4 concerne la détermination d'un filtre en fonction de l'éclairement rétinien de confort ;
- l'exemple n°5 concerne la détermination d'un filtre à partir d'un questionnaire permettant de déterminer le niveau de sensibilité de l'œil du porteur à un flux lumineux caractéristique.

Les procédés de détermination mis en œuvre dans les exemples n°1 et 2 reposent sur une mesure directe d'un paramètre physiologique de l'œil du porteur entraînant une augmentation de sa sensibilité à la lumière. Le procédé permet alors d'adapter un filtre qui permet de compenser totalement ou partiellement les causes de la gêne lumineuse.

Les procédés de détermination mis en œuvre dans les exemples n°3 et 4 s'attachent davantage aux conséquences d'un excès de lumière plutôt qu'aux causes à l'origine de l'éblouissement du porteur.

Les procédés décrits ci-après peuvent être considérés individuellement ou bien être couplés.

La description des exemples qui va suivre en regard des dessins annexés, donnés à titre d'exemples non limitatifs, fera bien comprendre en quoi consiste l'invention et comment elle peut être réalisée.

Sur les dessins annexés :

- la figure 1 représente une cible lumineuse utilisée dans l'exemple n°1 pour mesurer le coefficient de diffusion intraoculaire de l'œil d'un porteur ;
- la figure 2 détaille le principe de fonctionnement de la méthode de mesure du coefficient de diffusion intraoculaire au moyen de la cible de la figure 1 ;
- la figure 3 est une courbe représentant le coefficient moyen de diffusion intraoculaire (en log) d'un porteur en fonction de son âge ;
- la figure 4 représente une courbe possible de transmittance en fonction de la longueur d'onde pour un filtre déterminé dans l'exemple n°1 ;
- la figure 5 représente les courbes de transmittance de différents filtres déterminés en fonction du coefficient de diffusion intraoculaire d'un porteur ;
- la figure 6 représente la courbe de transmittance du filtre déterminé dans l'exemple n°1 ;
- la figure 7 représente le spectre typique d'absorption (densité optique) du pigment maculaire de l'œil ;
- la figure 8 représente deux formes différentes de distribution spatiale du pigment maculaire d'un œil ;
- la figure 9 est un diagramme-bloc de la méthode utilisée dans l'exemple n°2 pour la détermination du filtre adapté au porteur en fonction de la densité du pigment maculaire du porteur ;
- la figure 10 présente des exemples de spectre de filtres possibles en fonction de la densité du pigment maculaire ;
- la figure 11 est un schéma explicatif du procédé de détermination du filtre dans l'exemple n°3 utilisant un cône de prescription ;
- la figure 12 donne des exemples de cônes de prescription mesurés dans l'exemple n°3 ;
- la figure 13 est une courbe représentant la luminance d'une source au seuil d'inconfort en fonction de la longueur d'onde obtenue dans l'exemple n°4 ;
- la figure 14 représente la courbe de la figure 13 avec une courbe de l'éclairement rétinien d'un porteur à un instant donné ;

- la figure 15 représente une échelle d'évaluation faisant partie d'un questionnaire permettant de caractériser l'inconfort d'un porteur dans un environnement lumineux.

## EXEMPLE 1

La diffusion, aussi appelée étalement spatial, est la propriété qu'a la matière, finement divisée, de disperser la lumière dans toutes les directions.

Lorsque l'on considère l'œil d'un porteur, cette diffusion intraoculaire peut être générée par toutes les surfaces optiques et tous les milieux transparents traversés : larmes, cornée, humeur aqueuse, iris, cristallin, corps vitré, et rétine.

La perte de transparence de l'œil du porteur peut être due notamment à la présence d'opacités : cataracte, perte de transparence de la cornée (par ex. due à un kératocône), ou du corps vitré (corps flottants). Ces atteintes touchent principalement des porteurs âgés en raison du vieillissement de l'œil, ou alors font suite à une chirurgie.

La diffusion intraoculaire a pour conséquence une dégradation des performances visuelles, avec notamment une diminution de l'acuité visuelle, de la sensibilité aux contrastes, de la vision des couleurs.

Par ailleurs, la diffusion de la lumière dans l'œil augmente la sensibilité du porteur à la lumière. En effet, la diffusion crée des halos de lumière qui viennent se projeter sur toute la rétine et saturer en plus grand nombre les photorécepteurs.

La diffusion de la lumière dans l'œil d'un porteur dépend :

- de l'angle solide sous lequel le porteur voit la source et de l'excentricité (l'angle) que fait la source par rapport à l'axe visuel du porteur : plus la source est proche de l'axe visuel, plus la diffusion sera importante ;
- du contenu spectral de la source lumineuse à l'origine de la gêne : le coefficient de diffusion intraoculaire est plus important pour les courtes longueurs d'ondes, par exemple inférieures à 500 nanomètres (nm), qu'aux grandes longueurs d'onde, par exemple supérieures à 600 nm, en particulier lorsque l'excentricité de la source lumineuse est inférieure ou égale à 3° par rapport à l'axe visuel du porteur.

Dans cet exemple, on verra que le procédé de détermination permet d'adapter un filtre pour réduire les gênes liées à la diffusion intraoculaire de l'un ou des deux yeux d'un porteur.

À cet effet, on mesure lors de l'étape de mesure le coefficient de diffusion ou d'absorption intraoculaire de l'œil du porteur. Ce coefficient est représentatif de la sensibilité de l'œil du porteur à l'éblouissement et correspond à une grandeur de mesure objective physiologique de cette sensibilité.

De préférence, le coefficient de diffusion est mesuré à différentes longueurs d'onde, par exemple en utilisant soit une source à spectre large, par exemple une source de lumière blanche, soit une ou plusieurs sources de longueurs d'onde différentes et de spectre limité.

Lors de l'étape de détermination, le filtre est adapté pour limiter la transmission des longueurs d'onde pour lesquelles le coefficient de diffusion est le plus élevé dans le cas où l'on mesure sur un spectre limité, et on modifie l'ensemble des longueurs d'onde du filtre dans le cas d'une mesure avec une source à spectre large.

On connait un appareil, dit *« C-quant »*, développé par la société Oculus (voir par ex. http://www.oculus.de/en/ products/visual-test-equipment/c-quant), qui permet la mesure précise de la quantité de lumière dispersée sur la rétine d'un porteur due à la diffusion intraoculaire dans l'œil du porteur.

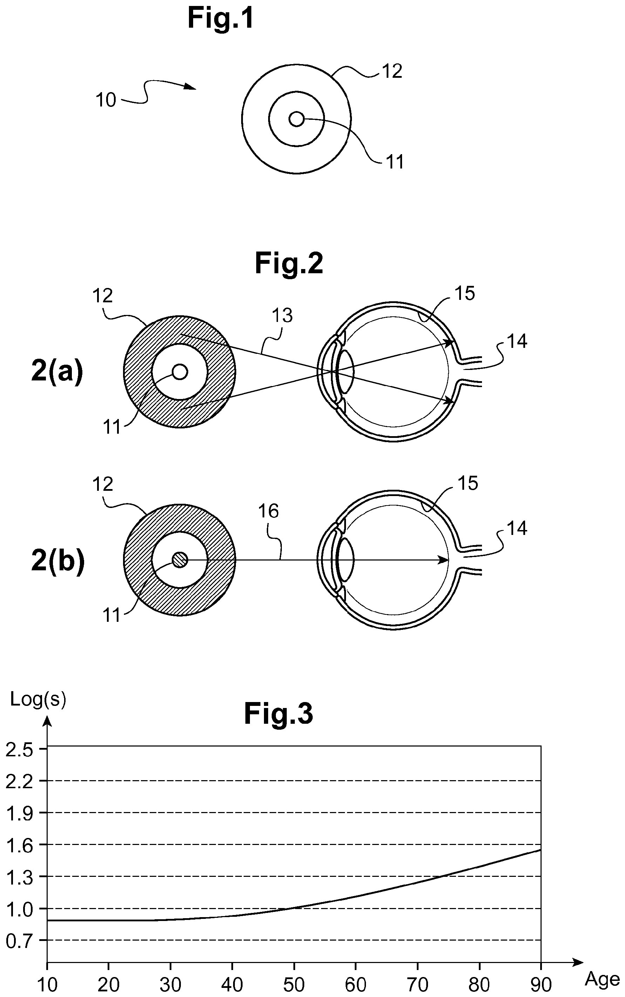

Cet appareil comprend un écran d'affichage sur lequel sont affichées des cibles lumineuses 10 telles que celles représentées sur la figure 1. Chaque cible comprend un rond central 11 et un anneau extérieur 12.

Comme représenté sur la figure 2(a), lors de la mesure, le porteur regarde une cible dont l'anneau extérieur 12 clignote. Les rayons lumineux 13 provenant de cet anneau extérieur se diffusent en traversant les milieux oculaires et se projettent sur toute la rétine 15, notamment sur la région centrale 14 avec laquelle le porteur fixe le rond central 11. Le porteur a alors l'impression de voir le rond central 11 clignoter lui aussi, à cause de la diffusion intraoculaire. Cette impression persiste même si en pratique le rond central 11 reste éteint.

On ajuste alors (cf. figure 2(b)) la lumière émise 16 par le rond central 11 qui clignote en opposition de phase par rapport à l'anneau extérieur 12. Puis, on augmente cette lumière, dite de compensation, jusqu'à ce que le sujet ne voie plus la différence de clignotement entre les deux phases. Le porteur ne perçoit alors plus de clignotement dans la zone centrale 14.

La quantité de lumière de compensation nécessaire à ajouter pour obtenir l'égalité de perception des zones centrales donne alors une mesure du taux de dispersion de l'œil du porteur pour ce type de lumière.

Le coefficient de diffusion correspond alors ici au niveau logarithmique de compensation de la dispersion.

Ce coefficient, appelé « *Retinal Straylight Parameter* » en anglais, et noté conventionnellement s, est donnée par la formule suivante :

$$s = \theta^2 \times (L_{eq}/E_{total}),$$

où

- $\theta$ est le rayon moyen de l'anneau extérieur créant la diffusion,
- $L_{eq}$ est le niveau de luminance en cd/m$^2$ de la lumière de compensation,
- $E_{total}$ est l'intensité de la source créant la diffusion.

Le coefficient de diffusion s peut être compris entre 0 et 2,5 log.

En pratique, le coefficient de diffusion ne peut pas être nul (absence de diffusion), car l'œil du porteur n'est pas un système optique parfait.

Il a été défini *(voir par exemple* Van den Bergh et al., « History of ocular straylight measurement: A review », Z. Med. Phys. 2013, 23(1), pp. 6-20*)* des niveaux moyens de diffusion intraoculaire en fonction de l'âge exprimé en années (voir figure 3), ainsi que des certains critères de confort pour des activités. Par exemple, il a été déterminé un coefficient de diffusion maximum de 1,5 log pour permettre une vision confortable et efficace lors des tâches de conduite.

Plusieurs mesures peuvent être effectuées en utilisant l'appareil décrit ci-dessus pour différentes longueurs d'ondes, ou différentes gammes de longueurs d'ondes, par exemple situées dans des valeurs extrêmes du spectre visible (400-700 nm) et/ou à différentes excentricités.

Il est alors possible de déterminer grâce au procédé de détermination les caractéristiques du filtre à prescrire au porteur grâce à ces mesures, en particulier sa réponse spectrale, ici la courbe de transmittance T($\lambda$) en fonction de la longueur d'onde $\lambda$.

Dans un premier temps, la mesure du coefficient de diffusion à différentes longueurs d'ondes nous renseigne tout d'abord sur la forme à donner à la courbe de transmittance du filtre.

En effet, si la lumière à une longueur d'onde donnée se diffuse plus en comparaison à une autre, il est avantageux de la filtrer en proportion davantage. Ainsi, le calcul de la différence des coefficients de diffusion entre différentes longueurs d'onde (ou différence entre deux gammes de longueurs d'ondes) est lié à la différence sur le niveau de transmittance à prescrire entre ces différentes longueurs d'ondes.

Dans un deuxième temps, la valeur même des coefficients de diffusion intraoculaire pour les différentes longueurs d'ondes permet de définir le niveau de la transmittance du filtre à prescrire.

On peut par exemple considérer qu'à partir d'un coefficient de diffusion supérieur à celui de la norme, il est nécessaire de filtrer cette longueur d'onde.

Cette limite peut être par exemple choisie à 1,1 log, qui est la valeur de la norme pour un porteur sain de moins de 45ans avec une lumière achromatique.

La valeur (en %) de la transmittance T($\lambda$) pour une longueur d'onde $\lambda$ donnée est alors déterminée comme étant égale à la différence (en log) entre le coefficient de diffusion intra-oculaire s($\lambda$) à cette longueur d'onde $\lambda$ pour le porteur soumis au flux lumineux caractéristique et le coefficient de diffusion normal pour un porteur.

Ainsi, on a la formule suivante : T($\lambda$) = log[s($\lambda$)] - 1,1.

On va donner ci-après un exemple d'interprétation de mesures obtenues grâce au procédé décrit ci-dessus.

On a reporté dans les tableaux suivants les valeurs des coefficients de diffusion pour l'œil droit et pour l'œil gauche d'un porteur.

Dans le tableau n°1, les valeurs sont mesurées pour deux longueurs d'onde différentes : 450 et 650 nm.

Dans le tableau n°2, les valeurs sont mesurées pour deux gammes de longueurs d'onde différentes : 450-500 nm et 600-650 nm.

L'interprétation des données sera faite uniquement pour l'œil droit par souci de simplicité.

**Tableau 1**

| Longueur d'onde | Coefficient de diffusion Œil Droit | Coefficient de diffusion Œil Gauche |
|---|---|---|
| 450 nm | 1,7 | 1,8 |
| 650 nm | 1,2 | 1,3 |

**Tableau 2**

| Longueur d'onde | Coefficient de diffusion Œil Droit | Coefficient de diffusion Œil Gauche |
|---|---|---|
| 450-500 nm | 1,7 | 1,8 |
| 600-650 nm | 1,2 | 1,3 |

Le coefficient de diffusion à 450 nm est de 0,5 log, soit une diffusion moins importante que la diffusion intraoculaire moyenne tolérée (1,1). Ainsi, il n'est pas nécessaire de filtrer cette longueur d'onde ou cette partie du spectre. La transmittance du filtre associée à cette longueur d'onde (ou partie du spectre) sera donc égale à 100%.

On détermine alors la transmittance $T(\lambda)$ du filtre comme étant telle que : T(450 nm) = T(650 nm) / 5.

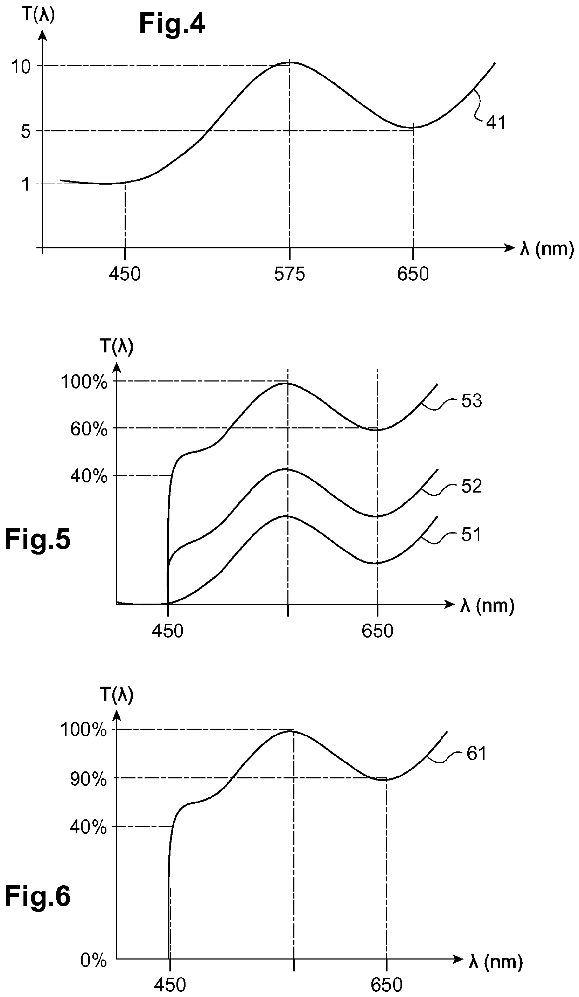

Il est possible de suivre ce même raisonnement notamment pour toutes les longueurs d'onde du flux lumineux caractéristique (par exemple pour celle à 575 nm avec un coefficient de diffusion de 0,7) et obtenir une courbe de transmittance 41 telle que représentée sur la figure 4.

Après avoir défini le spectre du filtre, il convient de définir son intensité qui peut être à différents niveaux comme l'illustrent les courbes 51, 52, 53 de la figure 5.

Des valeurs du tableau 1, on voit que le coefficient de diffusion à 450 nm est supérieur de 0.6 au coefficient de diffusion défini par la norme pour un porteur normal (1,1). Ceci signifie qu'il faut retirer (1,7-1,1)*100 = 60% du flux à cette longueur d'onde pour avoir une transmittance égale à 40% à cette longueur d'onde.

De la même manière, le coefficient de diffusion à 650 nm étant égal (en log) à 1,2, il faut enlever (1,2-1,1)*100 = 10% de la lumière à cette longueur d'onde, pour atteindre une transmittance du filtre égale à 90%.

On détermine finalement un filtre à prescrire au porteur dont la réponse spectrale 61, ici la transmittance en fonction de la longueur d'onde, est représentée sur la figure 6.

Dans le cas de l'utilisation d'une source à spectre large, on peut déterminer les coefficients de diffusion moyens sur l'ensemble des longueurs d'ondes et appliquer une même valeur de transmission sur l'ensemble du spectre du filtre suivant les mêmes formules.

Ainsi, le spectre du verre devra avoir les caractéristiques comme ci-dessus :

- si ce type de verre est déjà commercialisé, il peut être prescrit ;
- si ce type de verre n'est pas commercialisé, il peut être fabriqué de manière personnalisée ;
- un verre programmable peut également permettre de modifier l'intensité du filtre en fonction des caractéristiques de l'éclairage à laquelle le porteur est soumis en temps réel : variation de spectre dans un environnement donné (lumière intérieure vs. extérieure) ; variation d'angle d'incidence des rayons lumineux (à différents spectres).

On notera par ailleurs qu'une asymétrie de la diffusion intraoculaire peut exister entre l'œil droit et l'œil gauche. Dans ce cas, on peut prévoir de déterminer des filtres avec des spectres différents pour les deux yeux en fonction de l'œil du porteur pour lequel la diffusion intraoculaire est la plus forte.

Enfin, si on obtient une cartographie de la diffusion intraoculaire suivant différents angles d'incidence de la lumière, il est alors possible de proposer des verres n'ayant pas une teinte uniforme sur tout le verre (dégradé, dégradé concentrique, etc.), et même de personnaliser cette géométrie de la teinte en fonction de ces mesures.

## EXEMPLE 2

Dans cet exemple, on décrira un procédé de détermination d'un filtre en fonction de la sensibilité à l'éblouissement d'un porteur à partir des mesures de densité et/ou de répartition du pigment maculaire dans l'œil du porteur.

Le pigment maculaire (PM) est situé dans la zone maculaire de la rétine, sur les 6° centraux d'excentricité rétinienne $\varepsilon$ (Wolf-Schnurrbusch et al., « Ethnic differences in macular pigment density and distribution », Invest. Ophthalmol. Vis. Sci. 2007, 48(8), pp. 3783-3787; Bernstein PS, « The value of measurement of macular carotenoid pigment optical densities and distributions in age-related macular degeneration and other retinal disorders », Vision Res. 2010). Il est composé de lutéine et de zéaxanthine (les caroténoïdes de l'œil). Il est localisé dans la couche plexiforme externe de la rétine et a pour rôle d'absorber le flux lumineux compris dans une gamme spécifique de longueurs d'onde comprise entre 430 et 480 nm. Ce pigment maculaire présente par ailleurs un pic maximum d'absorption d'environ 40% autour d'une longueur d'onde de 460 nm.

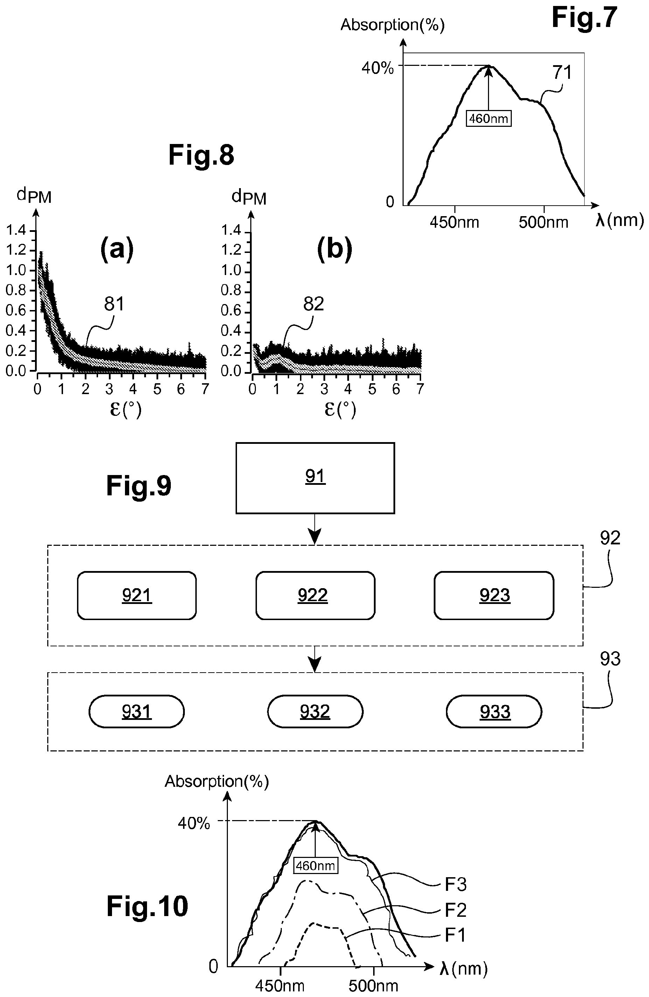

Un spectre typique 71 d'absorption du pigment maculaire est présenté sur la figure 7 en fonction de la longueur d'onde $\lambda$.

Le pigment maculaire a pour fonction de protéger les tissus cellulaires des effets néfastes de la photo-oxydation provoquée par la lumière bleue et de diminuer la diffusion de la lumière bleue en l'absorbant.

Avec l'âge, la densité de ce pigment maculaire, noté ici $d_{PM}$ (voir par exemple figures 8(a) et 8(b)) diminue de sorte qu'il existe une corrélation forte entre la concentration de ce pigment maculaire et le risque d'apparition d'une dégénérescence maculaire liée à l'âge, ou « DMLA » (voir par exemple Beatty S. et al., Invest. Ophthalmol. Vis. Sci. 2001; 42:439-446).

Le pigment maculaire peut avoir une distribution spatiale différente selon les porteurs. On distingue une répartition en pic (forme typique 81, voir figure 8(a)) ou en forme de tore (forme atypique 82, voir figure 8(b)). La première montre une diminution progressive de la densité $d_{PM}$ du pigment maculaire en fonction de l'excentricité. Il arrive aussi d'observer une cavité centrale dans la distribution spatiale du pigment maculaire au niveau maculaire. On parle alors de répartition en forme de *« donuts »* ou de chapeau mexicain.

Le pigment maculaire a un impact dans les performances visuelles d'un individu : il permet, d'une part, de diminuer l'impact des aberrations chromatiques sur la vision, et, d'autre part, de réduire l'éblouissement.

On notera enfin qu'il existe également une corrélation significative entre la baisse de la densité $d_{PM}$ du pigment maculaire et, d'un côté, la baisse de l'acuité visuelle et de la sensibilité aux contrastes et, de l'autre côté, l'augmentation du temps de récupération à un éblouissement lumineux (Stringham et al., « Macular pigment and visual performance under glare conditions ». Optom. Vis. Sci. 2008, 85(2), pp. 82-88).

On connaît des appareils pour mesurer la densité et la répartition spatiale du pigment maculaire à l'intérieur de l'œil d'un porteur : appareil MPS II (http://www.horus-pharma.com/index.php/fr/hi-tech/mpsii) de la société Horus Pharma, appareil « VisuCam » (http://www.zeiss.com/meditec/en_de/productssolutions/ophthalmology-optometry/retina/diagnostics/fundus-imaging/visucam-500.html) de la société Zeiss.

Le procédé décrit ci-après en référence à la figure 9 permet de déterminer un filtre permettant de compenser le rôle physiologique de ce pigment maculaire, en fonction de sa densité et/ou de sa répartition spatiale. Le filtre déterminé par ce procédé présente alors la même capacité d'absorption spectrale avec des intensités variables selon la densité et la répartition spatiale du pigment maculaire.

Lors d'une première opération, représentée par le bloc 91 sur la figure 9, on mesure la densité du pigment maculaire de l'œil du porteur destiné à recevoir le filtre.

Puis, lors d'une deuxième opération, représentée par le bloc 92 sur la figure 9, on effectue une segmentation du besoin d'action du filtre.

Enfin, lors d'une troisième opération, représentée par le bloc 93 sur la figure 9, on réalise une adaptation d'au moins une caractéristique optique du filtre.

Bloc 91 (mesure)

La mesure de la concentration du pigment maculaire peut être effectuée grâce à une méthode de mesure objective physique d'autofluorescence telle que celle implémentée dans l'appareil VisuCam de Zeiss ou bien grâce à une méthode subjective dite « photométrie Flicker hétérochromique » (Creuzot-Garcher et al., « Comparison of Two Methods to Measure Macular Pigment Optical Density in Healthy Subjects », Retina 2014 IOVS, May 2014, Vol. 55, No. 5, pp. 2941-2947).

Bloc 92 (segmentation)

En fonction de la densité et de la répartition spatiale du pigment maculaire, on peut, selon le procédé de l'invention, déterminer la réponse spectrale du filtre à prescrire.

Dans ce cas, la grandeur représentative de la sensibilité de l'œil du porteur au flux lumineux caractéristique est en lien avec la densité et/ou la répartition du pigment maculaire.

Lors de l'étape de détermination, on détermine la réponse spectrale du filtre comme étant conforme à la courbe d'absorption du pigment maculaire en fonction de la longueur d'onde.

De manière préférentielle, on détermine la réponse spectrale du filtre de sorte que le système formé par le filtre et l'œil du porteur présente une transmission spectrale proche de la transmission spectrale d'un œil de référence. Par « œil de référence », on entend un œil humain dont les photorécepteurs présentent une sensibilité moyenne. Par « proche » on entend que la transmission spectrale du système formé par le filtre et l'œil du porteur est comprise dans une marge prédéfinie autour de la transmission spectrale de l'œil de référence. Typiquement, cette marge peut être de plus ou moins 15% autour de la transmission spectrale de l'œil de référence.

En d'autres termes, le spectre du filtre déterminé est mimétique à celui du spectre du pigment maculaire (voir figure 10).

L'intensité du filtre (cf. courbes F1, F2, F3 sur la figure 10) est déterminée en fonction de la valeur de la densité du pigment maculaire.

En effet, la valeur de la densité du pigment maculaire indique le degré de protection à rehausser pour préserver la rétine.

Il y a alors trois fonctions possibles pour le filtre : compenser, suppléer ou soutenir le rôle du pigment maculaire.

Ces trois fonctions permettent de segmenter le besoin d'action du filtre.

Pour cette segmentation, on peut considérer soit la densité moyenne du pigment maculaire (par exemple obtenue par une méthode de type « *Flicker hétérochromique »),* soit l'ensemble de la répartition du pigment maculaire (par exemple obtenue grâce à une méthode par photographie).

Dans le cas de la première méthode, on considère ici trois segmentations.

La **segmentation n°1** (cf. bloc 921, figure 9) correspond à une densité du pigment maculaire inférieure à 0,2. Dans ce cas, le filtre doit compenser fortement le rôle protecteur du pigment maculaire.

La **segmentation n°2** (cf. bloc 922, figure 9) correspond à une densité du pigment maculaire qui est comprise entre 0,2 et 0,6. Dans ce cas, le filtre doit suppléer une partie des fonctions du pigment maculaire car la densité de celui-ci n'est pas optimale.

La **segmentation 3** (cf. bloc 923, figure 9) correspond à une densité du pigment maculaire supérieure à 0,6. Dans ce cas, le filtre a alors un rôle de prévention (par exemple de la DMLA).

Bloc 93 (détermination et adaptation du filtre)

Pour la segmentation n°1, l'intensité du filtre est déterminée (cf. bloc 931, figure 9) avec un taux d'absorption A($\lambda$) identique à celui du profil f($\lambda$) du pigment maculaire et un taux d'absorption maximum de 40 % pour une longueur d'onde de 460 nm (voir courbe F1 sur la figure 10).

Pour la segmentation n°2, l'intensité du filtre est déterminée (cf. bloc 932, figure 9) pour compenser le manque d'absorption du pigment maculaire en proportion de la perte : le taux d'absorption A($\lambda$) du filtre est alors défini par la relation A($\lambda$) = (1-d) x f($\lambda$), où d représente la densité du pigment maculaire mesuré lors de la première opération.

Pour la segmentation n°3, l'intensité du filtre est déterminée (cf. bloc 933, figure 9) pour renforcer l'action du pigment maculaire : le taux d'absorption A($\lambda$) du filtre est également défini par la relation : A($\lambda$) = (1-d) x f($\lambda$), où d représente la densité du pigment maculaire mesuré lors de la première opération.

Afin d'adapter le filtre et d'optimiser l'intensité du spectre du filtre à prescrire, il est également possible de tenir compte de la répartition rétinienne du pigment maculaire et des caractéristiques spectrales du flux lumineux caractéristique.

Par exemple, pour un porteur ayant une répartition spatiale du pigment maculaire atypique, on prévoit d'augmenter le taux d'absorption du filtre d'une quantité fonction de la densité moyenne du pigment maculaire et/ou en fonction de la répartition rétinienne de ce pigment (cf. Wolf-Schnurrbusch *et al., op. cit.*).

La répartition du pigment maculaire ne suit pas toujours une fonction gaussienne, centrée sur la fovéa. Elle peut suivre une forme différente, en forme dite « de chapeaux mexicains ». Le filtre doit tenir compte de la répartition de ce pigment maculaire pour le compléter au mieux.

On peut prévoir également que le filtre présente un taux d'absorption non uniforme sur sa surface de manière à s'adapter à la répartition spatiale du pigment maculaire.

De manière avantageuse, le filtre sera un filtre adaptatif dont le taux d'absorption n'est pas uniforme et est ajusté en temps réel sur sa surface, par exemple asservi par un dispositif de suivi de regard.

Il est également possible d'adapter le taux d'absorption du filtre au contenu spectral du flux lumineux caractéristique. Cette adaptation peut être statique ou dynamique.

## EXEMPLE 3

On verra dans cet exemple que lors de l'étape de mesure la grandeur représentative de la sensibilité de l'œil du porteur au flux lumineux caractéristique correspond à une sensibilité à l'éblouissement dudit porteur.

De manière générale, il est connu que l'éblouissement et le port de filtres, de type solaire par exemple, impactent la vision et le confort visuel d'un porteur de lentilles ophtalmiques munies de tels filtres.

Grâce au procédé de détermination du filtre, on détermine la réponse spectrale du filtre qui permet d'optimiser la vision et le confort du porteur et ce, quel que soit l'intensité du flux lumineux caractéristique.

Le procédé permet également la personnalisation de la réponse spectrale du filtre, qu'il soit actif ou passif, en fonction du porteur.

Le procédé proposé ici prend également en compte la réfraction du porteur afin d'avoir la meilleur précision possible dans cette mesure, qui se base et intègre les performances visuelles de ce porteur.

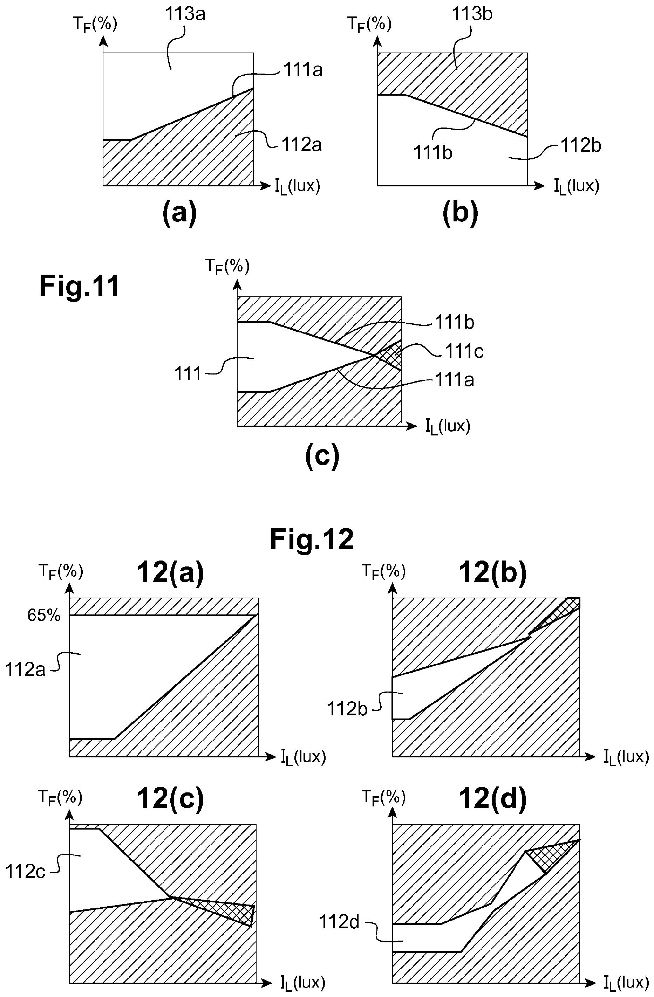

Comme l'illustre la figure 11, la détermination de la réponse spectrale du filtre est fondée sur l'utilisation d'un « cône de prescription ».

On va décrire ici brièvement le principe général de cette méthode du cône de prescription avant de décrire plus en détail le procédé de détermination du filtre.

Dans une première phase de la méthode, on détermine pour un environnement lumineux donné l'intensité et le spectre du filtre minimum préservant le confort.

Ceci est illustré par la figure 11(a) sur laquelle on a représenté l'intensité du filtre $T_F$ en fonction de l'intensité lumineuse $I_L$. La détermination de l'intensité minimale 111a du filtre définit deux zones distinctes : une zone de confort 113a (zone supérieure) pour laquelle le porteur n'est pas gêné dans l'environnement lumineux pour réaliser sa tâche ; et une zone d'inconfort 112a (zone inférieure hachurée) pour laquelle le porteur est gêné. La zone de performance visuelle peut aussi avoir une limite basse.

Dans une deuxième phase de la méthode, on détermine pour le même environnement lumineux l'intensité et le spectre du filtre maximum maintenant une performance de vision optimale (par exemple : maintien de l'acuité visuelle ou de la sensibilité aux contrastes).

Ceci est illustré par la figure 11(b) sur laquelle on a représenté l'intensité du filtre en fonction de l'intensité lumineuse. La détermination de l'intensité maximale 111b du filtre définit deux zones distinctes : une zone de performance visuelle 112b (zone inférieure) et une zone de perte de vision 113b (zone supérieure hachurée).

Dans une troisième phase, on combine les deux approches précédentes (figs. 11(a) et 11(b)) pour déterminer le cône de prescription 111 (voir fig. 11(c)). Cette zone détermine les caractéristiques optiques du filtre (intensité, réponse spectrale) qui préservent à la fois la performance visuelle et le confort visuel pour une large gamme donnée d'environnements lumineux.

La zone 111c de la figure 11(c) correspond à une zone dans laquelle le porteur expérimente à la fois une perte de performances visuelles et une perte de confort visuel.

Les seuils de confort et de performance visuelle peuvent être déterminés selon une méthode descendante ou ascendante. Ces méthodes prennent en compte le temps d'adaptation rétinien du porteur face à un flux lumineux.

Pour la méthode descendante, le porteur commence avec le verre le plus foncé (pour un spectre donné), et diminue l'intensité du flux lumineux pour déterminer les seuils (confort et performance). Le porteur part donc d'un état où la rétine est non saturée.

Pour la méthode ascendante, le porteur commence avec le verre le plus clair (pour un spectre donné), et augmente l'intensité du filtre pour déterminer les seuils (confort et performance). Le porteur part d'un état où il peut être ébloui : la rétine est sursaturée de lumière.

On va décrire ci-après plus précisément le procédé de détermination mis en œuvre dans cet exemple.

Dans une première étape de soumission, on place le porteur dans un environnement lumineux de sorte qu'il est soumis à un flux lumineux caractéristique contrôlé et paramétré.

Ce flux lumineux caractéristique est caractérisé par :

- une gamme d'intensité lumineuse, par exemple comprise entre 0 et 20000 lux ;
- une gamme de longueurs d'onde visibles, par exemple comprises entre 400 nm et 680 nm ;
- un éclairage diffus ou localisé, directif ou non directif, défini par exemple par une orientation et un diamètre de source lumineuse.

Par souci de simplification, on ne considérera dans cet exemple que les variations d'intensité pour expliquer le principe de la mise en œuvre du procédé.

La mesure de la sensibilité de l'œil du porteur peut être réalisée en faisant varier l'ensemble des paramètres cités ci-dessus afin de caractériser plus précisément le profil de sensibilité à l'éblouissement du porteur.

Il est aussi possible de répéter cette mesure en étudiant l'effet du spectre du flux lumineux caractéristique sur la sensibilité du porteur à la lumière.

Dans l'étape de mesure, le porteur regarde une cible de taille, forme, luminance, contraste de luminance, et de fréquences spatiales définies préalablement (ou de manière générale toute cible caractérisant une capacité visuelle, comme par exemple une cible colorée).

De préférence, la cible est choisie en fonction de l'activité du porteur, à savoir de l'exigence de vision souhaitée pour la tâche visuelle considérée. Elle peut par exemple être liée aux besoins en termes d'acuité visuelle, de sensibilité aux contrastes, à la précision du rendu des couleurs, etc....

Si cela est nécessaire, le porteur porte une paire de lentilles ophtalmiques permettant de corriger sa réfraction de manière optimale (sphère et cylindre).

Il porte également un filtre-test placé devant l'un et/ou l'autre de ses yeux, le taux d'absorption et/ou la réponse spectrale de ce filtre-test étant variable.

S'agissant de performance visuelle, on commence l'étape de mesure avec un filtre-test dont le taux d'absorption est élevé (verre le plus foncé).

En effet, dans le cas d'une mesure d'acuité visuelle ou de contraste, ce filtre-test filtre pénalise la vision : le porteur ne reconnait plus la cible.

On demande alors au porteur de diminuer le taux d'absorption du filtre (ou avec l'aide d'un opérateur) jusqu'à ce qu'il retrouve une perception visuelle satisfaisante. On se situe alors au seuil de performance visuelle (passage du « *non-vu* » au « *vu* »). Une méthode psychophysique peut également être utilisée pour définir cette zone. On relève le taux d'absorption du filtre qui détermine ce seuil, délimitant la zone autorisant une performance visuelle non dégradée pour le flux lumineux caractéristique considéré.

Ce test est réitéré pour des intensités lumineuses différentes du flux lumineux caractéristique. On obtient ainsi une courbe semblable à celle de la figure 11(a).

On réalise ensuite la même mesure, non plus avec un test de vision, mais en demandant au porteur la zone à partir de laquelle l'intensité du flux lumineux caractéristique est gênante ou entraîne un inconfort visuel.

Comme précédemment, on obtient alors une courbe semblable à celle de la figure 11(b).

On détermine ainsi une zone dans laquelle les performances visuelles sont optimales pour une gamme donnée d'intensité lumineuse du flux lumineux caractéristique et une gamme de taux d'absorption du filtre. On connaît également dans cette zone l'effet négatif d'un filtre sur les performances visuelles du porteur.

Dans cette zone de prescription, les caractéristiques optiques du filtre telles que le taux d'absorption ou la réponse spectrale sont alors déterminées de manière à ce que le filtre équilibre le confort et les performances visuelles du porteur.

Il est également possible de répéter ces mesures en soumettant le porteur à un flux lumineux caractéristique caractérisé par différents spectres modifié par le filtre ou par la source lumineuse elle même. De cette façon, on évalue l'influence du spectre du flux lumineux caractéristique sur la sensibilité à la lumière de l'œil du porteur. Ceci permet de guider le choix de la ou des caractéristiques optiques du filtre.

On peut réitérer ces mesures en considérant aussi d'autres critères tels que le confort visuel, la perception des couleurs, la perception des mouvements, etc....

On obtient ainsi une gamme de réponse spectrale permettant de maintenir vision et confort.

Selon le porteur, son âge, sa sensibilité rétinienne, le profil du cône de prescription va être différent. La mesure personnalisée de ce profil de sensibilité à la lumière de l'œil du porteur, soumis à différents flux lumineux caractéristiques oriente la personnalisation du filtre.

En effet, l'interprétation du profil du cône oriente :

- la gamme d'intensité/spectre du filtre à préconiser en fonction des variations et de l'environnement lumineux pour maintenir vision et confort,
- le choix des technologies des filtres :

    · filtres passifs, à teinte fixe avec un taux d'absorption constant quelle que soit l'intensité du flux lumineux caractéristique ;
    · filtres actifs du type verres photochromiques dont le taux d'absorption et/ou la réponse spectrale varie en fonction de l'intensité lumineuse, des caractéristiques énergétiques (UV) et/ou du spectre du flux lumineux caractéristique ;
    · filtres actifs du type verres électrochromes dont le taux d'absorption et/ou la réponse spectrale varie de manière non linéaire en fonction de l'intensité lumineuse et/ou du spectre du flux lumineux caractéristique pour garantir un bon équilibre entre la vision et le confort du porteur.

On décrira ci-après, en référence aux figures 12(a) à 12(d), quelques exemples de cône de prescription obtenus grâce à la méthode présentée ci-dessus.

La figure 12(a) montre une zone de confort 112a relativement large. Un filtre passif, par exemple présentant une transmission fixe de 65%, donne une performance de vision et de confort optimale, quelque soient les conditions lumineuses.

La figure 12(b) montre une zone de confort 112b avec une progression linéaire entre le taux d'absorption $T_F$ du filtre et l'intensité lumineuse $I_L$ du flux lumineux caractéristique. Dans ce cas, un verre avec un filtre photochromique est à préconiser.

La figure 12(c) montre une zone de protection 112c avec filtre dont la teinte est limitée. Le porteur est très sensible à la lumière. Le seuil d'inconfort est assez haut. Le porteur a besoin d'un filtre même à faible intensité lumineuse. Lorsque l'intensité lumineuse augmente, le porteur rentre vite dans une zone d'inconfort et de perte de vision, même avec un filtre donné. Un filtre passif est à préconiser, par exemple avec un facteur de transmission supérieur à 30% pour les intensités faibles. Ensuite, une combinaison de filtres ou d'équipements est à préconiser.

La figure 12(d) nous montre une zone de prescription 112d étroite et non linéaire, où seul un verre électrochrome pourrait répondre aux besoins du porteur. Le taux d'absorption du filtre doit s'adapter différemment à différentes intensités lumineuses. Les gammes de taux d'absorption de filtre sont également étroites pour chaque intensité lumineuse du flux lumineux caractéristique. La possibilité de sélectionner précisément une intensité donnée est indispensable (besoin de fort modularité de l'intensité du filtre). Pour chaque intensité lumineuse du flux lumineux caractéristique, une transmission de filtre est associée pour maintenir un bon compromis vision/confort.

Dans l'exemple de la figure 12(d), on peut également envisager la prescription de deux filtres passifs correspondants à deux plages différentes d'intensité lumineuse du flux lumineux caractéristique :

- un filtre d'intérieur pour une intensité lumineuse inférieure à 400 lx par exemple avec une transmittance de 15% permettant de soulager le porteur et préserver sa vision, et
- un filtre d'extérieur, pour une intensité lumineuse supérieure à 4000 lx par exemple avec une transmittance égale à 65% pour répondre aux besoins du porteur.

Dans le cas d'un verre muni d'un filtre actif, il est possible de déterminer le taux d'absorption et/ou la réponse spectrale à programmer pour le porteur, parmi la gamme de filtres possible, en tenant en compte de la consommation du système pour qu'elle soit la plus faible, ou programmer le taux d'absorption et/ou la réponse spectrale afin d'anticiper des variations d'intensité lumineuse rapidement accessible selon le temps d'activation du système actif pour changer d'intensité.

La méthode basée sur le cône de prescription peut également être implémentée en faisant varier :

- le spectre du flux lumineux caractéristique de manière à évaluer la réponse spectrale du filtre le spectre dont le porteur a besoin pour maintenir une bonne vision et un bon confort quelles que soient les caractéristiques du flux lumineux ;
- la distribution spatiale du flux lumineux caractéristique en utilisant une source de lumière diffuse ou localisée ;
- l'intensité lumineuse du flux lumineux caractéristique de manière à prendre en compte l'impact des transitions lumineuses sur le porteur.

On peut en particulier faire varier ces paramètres de manière à se rapprocher des conditions réelles telles que vécues par le porteur.

Par exemple, on peut prendre en compte son environnement lumineux quotidien qui peut être différent d'un individu à un autre (temps passé à l'extérieur/intérieur, climat, ensoleillement, conduite nocturne, etc...) pour que le spectre, l'intensité ou la distribution spatiale soient représentatives de ces conditions.

## EXEMPLE 4

Dans ce quatrième exemple, on cherche à déterminer un filtre permettant de maintenir un éclairement rétinien de confort pour l'œil du porteur soumis à un flux lumineux caractéristique. Ce seuil d'éclairement rétinien de confort est le seuil au-delà duquel le confort visuel et/ou les performances visuelles dudit porteur sont dégradés.

En d'autres termes, il s'agit ici de déterminer le taux d'absorption et/ou la réponse spectrale du filtre qui permet de réguler l'illumination rétinienne afin de l'adapter à l'éclairement rétinien de confort du porteur.

On rappelle tout d'abord que la perception visuelle n'est déclenché qu'au-delà d'une quantité de lumière minimale qui permet d'activer le processus de photo-transduction des photorécepteurs rétiniens (cônes et bâtonnets).

À l'inverse, une pénalisation de la vision (incapacité visuelle) peut faire suite à un sur-éclairement conduisant à une sur-saturation de la rétine (inconfort) par réduction de la régénération des pigments visuels.

Ainsi, un des objectifs du procédé décrit ci-après est de déterminer au moins une caractéristique optique d'un filtre, par exemple son taux d'absorption et/ou sa réponse spectrale, pour ajuster l'éclairement rétinien du porteur à une valeur seuil qui autorise une bonne régénération des pigments visuels et une illumination rétinienne en dessous du seuil d'inconfort.

À cet effet, on tient compte de plusieurs paramètres :

- paramètres oculaires : diamètre pupillaire, dynamique de traitement de l'illuminance rétinienne, diffusion de l'œil :
- propriétés du flux lumineux caractéristique : illuminance de la source et distribution angulaire du flux lumineux, angle solide et taille de la source, durée d'exposition.

Dans une phase préliminaire, on équipe si nécessaire le porteur d'une paire de lentilles ophtalmiques permettant de corriger sa réfraction de manière optimale.

Ensuite, on définit le seuil d'éclairement rétinien de confort du porteur qui permet de maintenir le confort visuel et/ou une capacité visuelle. Ce seuil correspond à la luminance rétinienne qui ne perturbe pas le fonctionnement rétinien lié à une sur-saturation lumineuse des photorécepteurs et des structures connexes de l'œil du porteur.

De manière générale, l'illuminance rétinienne E est proportionnelle au produit de la luminance $L_S$ (en candelas par mètre carré ou cd/m$^2$) de la source et de l'aire pupillaire Ap (m$^2$) : $E = \pi \times (A_P^2/4) \times L_S$.

La quantité $L_S \times A_P$ définit une grandeur dont l'unité est le Troland (Td).

L'aire pupillaire (diamètre de la pupille) est dépendante de la luminance de la source mais également de son contenu spectral. Aussi, il est nécessaire de calculer l'éclairement rétinien $E_{ret}$ en prenant en compte à la fois l'intensité I et la composante spectrale de la source (ensemble des longueurs d'onde λ).

Pour cela, on se base sur le même principe que la méthode du cône de prescription. On détermine dans un environnement lumineux contrôlé (par ex. : boîte à lumière paramétrable), le seuil d'inconfort subjectif exprimé par le porteur pour différentes combinaisons d'intensité et de spectre du flux lumineux caractéristique.

Au seuil d'inconfort exprimé par le porteur, est calculé l'éclairement rétinien de confort par la formule suivante : $E_C(I,\lambda) = \int \pi \times (A_P^2/4) \times L_S(I,\lambda)$

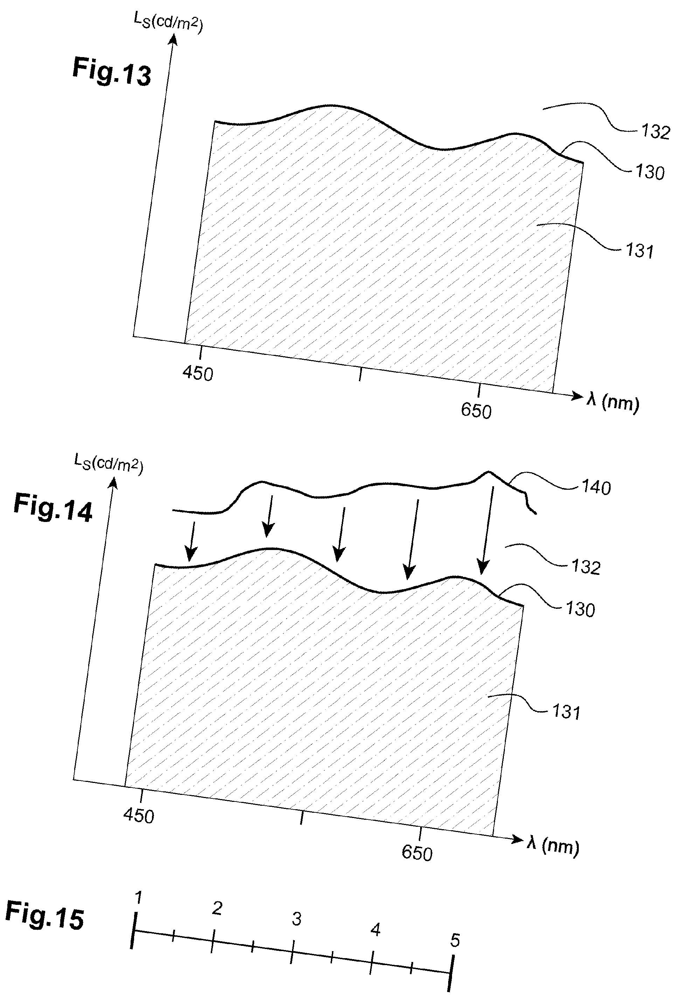

On a représenté sur la figure 13 un exemple de courbe 130 obtenue montrant en fonction de la longueur d'onde la luminance de la source au seuil d'inconfort avec en-dessous de cette courbe la zone de confort 131 (zone hachurée) et au-dessus la zone d'inconfort 132.

Pour déterminer le filtre qui va adapter l'éclairement rétinien en dessous du seuil d'inconfort, il convient tout d'abord d'évaluer si le porteur se situe dans une zone d'inconfort 132 (éblouissement).

À cet effet, on caractérise le flux lumineux auquel est soumis le porteur, à savoir : son intensité, son spectre, sa distribution spatiale et/ou angulaire, la géométrie de la source. Des capteurs de luminance, un spectromètre ainsi qu'une mesure du diamètre pupillaire va permettre de calculer l'éclairement rétinien $E_{ret}$ du porteur (même formule que précédemment) pour un flux lumineux prédéterminé.

Si l'éclairement rétinien $E_{ret}$ auquel est soumis le porteur est inférieur à l'éclairement rétinien de confort $E_C$ précédemment déterminé, alors aucun filtre n'est nécessaire.

En revanche, si l'éclairement rétinien $E_{ret}$ est supérieur à l'éclairement rétinien de confort $E_C$ précédemment déterminé, alors une protection par filtre peut s'avérer utile.

On notera par ailleurs que la pupille du porteur joue un rôle important dans la détermination de l'éclairement rétinien du fait de son implication dans la régulation du flux lumineux entrant dans l'œil du porteur. Le diamètre pupillaire et l'analyse de la constriction/dilatation de la pupille permettent de quantifier l'éclairement rétinien.

De plus, le diamètre pupillaire est dépendant de l'âge du porteur, des caractéristiques de la lumière (spectre, intensité, ..) et du type de photorécepteurs rétiniens stimulés par la source lumineuse caractéristique (cônes, bâtonnets, capteurs à mélanopsine).

On détermine enfin le taux d'absorption et/ou la réponse spectrale du filtre pour adapter l'éclairement rétinien $E_{ret}$ au seuil d'éclairement rétinien de confort $E_C$.

On détermine tout d'abord le spectre du filtre permettant d'ajuster la qualité du flux lumineux (en fonction des longueurs d'onde) aux profils des seuils de confort du sujet. Le seuil de confort est dépendant à la fois du spectre de la lumière et également de la sensibilité des photorécepteurs selon les longueurs d'ondes. Avec l'âge, par exemple, et l'évolution de la structure physiologique rétinienne, nous pouvons avoir des modifications de sensibilités de la courbure spectrale de nos photorécepteurs. Il est ainsi important de déterminer pour chaque longueur d'onde ou plage de longueur d'onde un seuil d'inconfort pour personnaliser le spectre du filtre à la sensibilité rétinienne et ce selon la caractéristique de la lumière pour lequel le sujet est confronté. Une analyse du comportement pupillaire peut être un moyen de déterminer cette sensibilité rétinienne.

On considère ici l'exemple de la figure 14 sur laquelle sont représentées :

- la courbe 130 du seuil d'éclairement rétinien de confort (courbe en trait plein) en-dessous de laquelle se situe la zone de confort (zone hachurée) ; et
- une courbe 140 de l'éclairement rétinien du porteur à un instant donné.

Partant de cet exemple, on détermine le spectre et l'intensité du filtre de la façon suivante :

- pour le spectre : on adapte le taux d'absorption du filtre en fonction de la longueur d'onde au profil de la courbe 130 de confort au seuil. Ici, le taux d'absorption est donc plus élevé dans les rouges que dans les bleus ;
- pour l'intensité : on adapte le taux d'absorption pour abaisser l'éclairement rétinien 140 à un temps donné en dessous du seuil 130 d'éclairement de confort. On peut définir un pourcentage de seuil d'abaissement en-deçà de la zone de confort, par exemple 20% inférieur, pour éviter de mettre le porteur à sa limite d'inconfort.

On choisira alors un filtre dont la transmittance $T(\lambda)$ en fonction de la longueur d'onde (exprimée en %) est donnée par la formule suivante :

$T(\lambda) = \int [E_C(I,\lambda) / E_{ret}(I,\lambda)] \times 100$, la sommation étant effectuée entre 450 et 650 nm.

L'intensité du filtre est déterminée par un seuil à définir pour adapter l'éclairement rétinien en deçà de son seuil d'inconfort.

Si on suppose 20% de tolérance, le filtre doit absorber 20 % en plus (soit transmettre 80% du flux), le filtre F() est défini par la formule suivante :

$$F(I,\lambda) = 1 - (20/100) \times \int [E_C(I,\lambda) / E_{ret}(I,\lambda)] \times 100.$$

Afin de simplifier l'analyse, il est possible de déterminer l'éclairement rétinien de confort avec une lumière blanche. Cela permet de déterminer l'intensité du filtre à prescrire, de la même manière.

On pourra ainsi déterminer :

- le filtre passif existant dont l'intensité et/ou le spectre se rapproche le plus de ladite valeur ;
- le filtre passif dont l'intensité et/ou la réponse spectrale sont personnalisées ;

- la programmation d'un verre actif en intensité et/ou en spectre afin d'adapter l'éclairement rétinien en toute circonstance selon l'environnement lumineux auquel est soumis le porteur.

On notera néanmoins que la prescription d'un filtre va agir sur le diamètre pupillaire. Un filtre foncé entraînera une augmentation du diamètre pupillaire et ainsi impacter l'éclairement rétinien. Cet effet doit être pris en compte dans la validation du filtre final pour valider le maintien de l'éclairement rétinien de confort.

Enfin, il est fréquent avec l'âge d'observer des anisocories, à savoir des différences de diamètre pupillaire entre l'œil droit et l'œil gauche du porteur. Cette situation peut créer un déséquilibre du flux lumineux sur les deux yeux du porteur.

Une évaluation des seuils rétiniens de confort en vision monoculaire et binoculaire permettra de proposer une intensité et un spectre de filtres différents entre les deux yeux pour rééquilibrer le confort et les performances visuelles binoculaires du porteur.

## EXEMPLE 5

Dans ce cinquième exemple, on propose au porteur un questionnaire permettant de déterminer son niveau de sensibilité au flux lumineux.

On propose un ensemble de questions pour lequel le porteur fournit un indicateur sur son niveau de confort visuel ou de qualité visuelle, en fonction de différentes conditions lumineuses, par exemple nuit, crépuscule, jour, ensoleillé, nuageux, etc... et en fonction de ses activités, par exemple conduite, lecture, activité sportive, activité en intérieur ou en extérieur.

À titre d'exemple, le porteur peut fournir un indicateur compris entre 1 et 5 sur une échelle d'évaluation telle que représentée par exemple sur la figure 15.

Sur cette échelle, les différents niveaux sont les suivants :

- niveau « 1 » : niveau de confort visuel insupportable ou niveau de qualité visuelle très mauvais ;
- niveau « 2 » : niveau de confort visuel dérangeant ou niveau de qualité visuelle médiocre ;
- niveau « 3 » : niveau de confort visuel juste supportable ou niveau de qualité visuelle juste acceptable ;
- niveau « 4 » : niveau de confort visuel ou de qualité visuelle satisfaisant ;
- niveau « 5 » : niveau de confort visuel ou de qualité visuelle excellent.

On peut ainsi déterminer en fonction des réponses un profil de sensibilité du porteur. Il est alors possible de déterminer le niveau de sensibilité de plusieurs manières.

Selon une première méthode, on peut envisager avoir une base de données de porteurs de filtres pour lesquels les niveaux de sensibilité à la lumière ont été mesurés, par exemple selon un protocole tel que décrit dans l'un des exemples 1 à 4 ci-avant et pour lesquels les profils de sensibilité ont été déterminés avec un questionnaire identique.

On peut alors associer au porteur le niveau de sensibilité à la lumière des porteurs de la base de données ayant le même profil de sensibilité et proposer des filtres déterminés suivant les exemples 1 à 4.

Selon une seconde méthode, on peut considérer que le niveau de sensibilité exprimé par le porteur pour les différentes conditions lumineuses et les différentes activités come étant une mesure directe de sa sensibilité. Ainsi, par exemple, si le porteur exprime un inconfort pour une question portant sur des conditions lumineuses normales, alors le niveau de transmission du filtre peut être déterminé directement par le niveau d'inconfort.

Par exemple, pour un niveau d'inconfort de « 1 » sur l'échelle de la figure 15 (gêne visuelle insupportable), on peut préconiser un filtre ayant une transmission de 10%. À l'inverse, pour un niveau de confort de « 5 » (aucune gêne, confort excellent), on peut préconiser un filtre ayant une transmission de 90%.

Dans tous les cas, les réponses au questionnaire peuvent être pondérées en fonction du porteur ou en fonction de la fréquence à laquelle il rencontre la situation correspondant à la question.

Par exemple, si un porteur passe plus de temps en extérieur qu'en intérieur, on propose un poids plus élevé aux questions portant sur les conditions lumineuses extérieures.

À cet effet, on peut demander au porteur d'associer, pour chaque question, un coefficient donnant la fréquence à laquelle la situation est rencontrée, par exemple un coefficient 1 pour une situation rare, un coefficient 2 pour une situation occasionnelle, un coefficient 3 pour une situation fréquente, et un coefficient 4 pour une situation très fréquente.

De manière générale, quelle que soit la méthode utilisée (exemples 1 à 5), la détermination du filtre suivant l'une des méthodes décrites peut impliquer d'utiliser un filtre dont la transmission varie spatialement sur la lentille ophtalmique.

En effet, les sources d'éblouissement pouvant se situer dans des directions privilégiées dans l'environnement du porteur, on peut envisager d'avoir un filtre présentant un taux d'absorption et/ou une réponse spectrale différents entre la partie supérieure et la partie inférieure de la lentille ophtalmique.

D'un côté, la partie supérieure est principalement utilisée pour une activité en extérieur où le flux lumineux peut être très élevé et où le spectre de ce flux est celui de la lumière naturelle.

De l'autre côté, la partie inférieure est principalement utilisée pour une activité intérieure où le flux lumineux est limité et où le spectre de ce flux est souvent celui d'une lumière artificielle.

On notera enfin que les différentes méthodes des exemples 1 à 5 peuvent être combinées entre elles afin d'affiner la détermination du filtre optique.

Il est notamment possible de combiner la méthode des pigments maculaires (exemple 4) avec un questionnaire (exemple 5) de manière à obtenir un profil de sensibilité à la lumière de l'œil du porteur qui soit plus précis et plus complet.

**Revendications**

1. Procédé de détermination d'un filtre pour une lentille ophtalmique destinée à être placée devant l'œil d'un porteur, ledit filtre étant apte à améliorer ou à maintenir le confort visuel et/ou les performances visuelles dudit porteur,

   **caractérisé en ce qu'**il comporte :

   - une étape de mesure d'une grandeur représentative d'une sensibilité de l'œil ou des deux yeux du porteur à un flux lumineux caractéristique, et
   - une étape de détermination d'au moins une caractéristique optique dudit filtre en fonction de la grandeur représentative mesurée pour fabriquer ledit filtre ou pour programmer ledit filtre,

   **caractérisé en ce que** ladite grandeur représentative de la sensibilité de l'œil du porteur au flux lumineux caractéristique est choisie parmi l'une au moins des grandeurs suivantes :

   - le coefficient de diffusion intraoculaire de l'œil du porteur,
   - la densité du pigment maculaire de l'œil du porteur.

2. Procédé selon la revendication 1, selon lequel ladite grandeur représentative de la sensibilité de l'œil du porteur au flux lumineux caractéristique est de plus en lien avec le seuil de variation du confort visuel et/ou des performances visuelles exprimé ou mesuré.

3. Procédé selon la revendication 2, selon lequel ladite étape de mesure de la grandeur représentative de la sensibilité de l'œil du porteur au flux lumineux caractéristique comprend :

   - une étape de soumission du porteur à un questionnaire permettant d'apprécier la sensibilité du porteur audit flux lumineux caractéristique,
   - une étape de collecte des réponses du porteur audit questionnaire,

   la mesure de ladite grandeur représentative étant réalisée à partir desdites réponses du porteur au questionnaire

4. Procédé selon l'une des revendications 1 à 3, selon lequel ladite étape de mesure de la grandeur représentative de la sensibilité de l'œil du porteur au flux lumineux caractéristique comprend :

   - une étape de soumission du porteur audit flux lumineux caractéristique, et
   - une étape de caractérisation dudit flux lumineux caractéristique,

   la mesure de ladite grandeur représentative étant réalisée sur le porteur soumis audit flux lumineux caractéristique.

5. Procédé selon la revendication 4, selon lequel l'étape de caractérisation dudit flux lumineux caractéristique consiste en la mesure d'au moins l'une des grandeurs suivantes :

   - la distribution spatiale dudit flux lumineux caractéristique,
   - la distribution angulaire dudit flux lumineux caractéristique,
   - le spectre dudit flux lumineux caractéristique,
   - l'intensité dudit flux lumineux caractéristique.

6. Procédé selon l'une des revendications 1 à 5, selon lequel ladite au moins une caractéristique optique du filtre déterminée consiste en :

- le taux d'absorption dudit filtre,
- la réponse spectrale dudit filtre,
- la répartition spatiale de ces caractéristiques sur ladite lentille ophtalmique.

7. Procédé de détermination selon l'une des revendications 1 à 6, comportant en outre une étape d'évaluation de l'impact dudit flux lumineux caractéristique sur les performances visuelles du porteur lors de laquelle on réalise au moins l'une des mesures suivantes sur le porteur :

   - l'acuité visuelle,
   - la sensibilité aux contrastes,
   - le champ de vision,
   - la perception des couleurs,
   - la perception des distances,
   - le mouvement de paupière,
   - le diamètre pupillaire,
   - l'inconfort visuel sur une échelle d'inconfort, et
   - le temps de récupération après éblouissement.

8. Procédé de détermination selon les revendications 1 et 7, selon lequel la grandeur représentative de la sensibilité au flux lumineux caractéristique de l'œil du porteur est déterminée en fonction du coefficient de diffusion intraoculaire mesuré à différentes longueurs d'onde et selon lequel le taux d'absorption et/ou la réponse spectrale du filtre est ajustée en fonction dudit coefficient de diffusion intraoculaire.

9. Procédé selon l'une des revendications 1 à 8, selon lequel l'atténuation sélective du filtre est proportionnelle à la grandeur représentative de la sensibilité au flux lumineux caractéristique de l'œil du porteur.

10. Procédé selon l'une des revendications 1 à 9, selon lequel ladite caractéristique optique du filtre est déterminée également en fonction d'un indicateur sur le flux lumineux et/ou du besoin visuel auquel sera soumis le porteur dans ses activités.

11. Procédé de détermination selon la revendication 1, selon lequel la grandeur représentative de la sensibilité de l'œil du porteur au flux lumineux caractéristique est déterminée en fonction de la densité et/ou de la répartition du pigment maculaire.

12. Procédé selon la revendication 11, selon lequel, lors de l'étape de détermination du filtre :
    soit on détermine la réponse spectrale du filtre comme étant conforme à la courbe d'absorption du pigment maculaire en fonction de la longueur d'onde ;soit on détermine la réponse spectrale du filtre de sorte que le système formé par le filtre et l'œil du porteur présente une transmission spectrale proche de la transmission spectrale d'un œil de référence.

13. Procédé selon l'une des revendications 1 à 12, selon lequel, lors de ladite étape de détermination, on détermine le taux d'absorption du filtre et/ou la réponse spectrale du filtre, de sorte que, lorsque le porteur est soumis à un flux lumineux prédéterminé, l'éclairement rétinien $E_{ret}$ reçu par l'œil du porteur est inférieur, pour au moins une longueur d'onde, à un seuil d'éclairement rétinien au-delà duquel le confort visuel et/ou les performances visuelles dudit porteur sont dégradés.

14. Procédé selon la revendication 1, selon lequel, la grandeur représentative de la sensibilité au flux de l'œil du porteur comportant la densité du pigment maculaire, on applique les règles suivantes pour la détermination du filtre en fonction du résultat de la mesure de la densité du pigment maculaire :

    - si la densité du pigment maculaire est inférieure à 0,2 : la réponse spectrale du filtre est conforme à la courbe d'absorption du pigment maculaire en fonction de la longueur d'onde, ledit filtre présentant pour une longueur d'onde de 460 nanomètres un coefficient d'absorption maximal égal à 40%,
    - si la densité d du pigment maculaire est supérieure à 0,2 : la réponse spectrale du filtre est conforme à la courbe d'absorption $f(\lambda)$ du pigment maculaire en fonction de la longueur d'onde $\lambda$, le coefficient d'absorption $A(\lambda)$ dudit filtre à la longueur d'onde $\lambda$ étant tel que : $A(\lambda) = (1-d)*f(\lambda)$.

15. Procédé selon la revendication 1, selon lequel la grandeur représentative de la sensibilité au flux de l'œil du porteur est en plus en lien avec l'éclairement rétinien $E_{rét}(\lambda)$ en fonction de la longueur d'onde et comportant une étape de détermination de l'éclairement rétinien de confort $E_{confort}(\lambda)$ dudit porteur en fonction de la longueur d'onde et, lorsque ledit éclairement rétinien $E_{rét}$ est supérieur audit éclairement rétinien de confort $E_{confort}$ pour une pluralité au moins de longueurs d'onde, le filtre est déterminé par sa réponse spectrale $F(\lambda)$ qui est alors égale au produit d'une constante $\alpha$ prédéterminée par le rapport entre l'éclairement rétinien de confort $E_{confort}(\lambda)$ et l'éclairement rétinien $E_{rét}(\lambda)$ dudit porteur sans filtre, soit $F(\lambda) = \alpha \times (E_{confort}(\lambda) / E_{rét}(\lambda))$.

**Patentansprüche**

1. Verfahren zur Bestimmung eines Filters für eine ophthalmische Linse, die dazu bestimmt ist, vor dem Auge eines Trägers angeordnet zu werden, wobei der Filter in der Lage ist, den Sehkomfort und/oder die Sehleistungen des Trägers zu verbessern oder aufrechtzuerhalten, **dadurch gekennzeichnet, dass** es umfasst:

   - einen Schritt des Messens einer für eine Empfindlichkeit des Auges oder der beiden Augen des Trägers gegenüber einem charakteristischen Lichtstrom repräsentativen Größe, und
   - einen Schritt des Bestimmens mindestens eines optischen Merkmals des Filters in Abhängigkeit von der gemessenen repräsentativen Größe, um den Filter herzustellen oder um den Filter zu programmieren,

   **dadurch gekennzeichnet, dass** die für die Empfindlichkeit des Auges des Trägers gegenüber dem charakteristischen Lichtstrom repräsentative Größe aus mindestens einer der folgenden Größen gewählt ist:

   - Koeffizient der intraokularen Streuung des Auges des Trägers,
   - Dichte des Makulapigments des Auges des Trägers.

2. Verfahren nach Anspruch 1, wobei die für die Empfindlichkeit des Auges des Trägers gegenüber dem charakteristischen Lichtstrom repräsentative Größe darüber hinaus mit der geäußerten oder gemessenen Änderungsschwelle des Sehkomforts und/oder der Sehleistungen verknüpft ist.

3. Verfahren nach Anspruch 2, wobei der Schritt des Messens der für die Empfindlichkeit des Auges des Trägers gegenüber dem charakteristischen Lichtstrom repräsentativen Größe umfasst:

   - einen Schritt, bei dem der Träger einem Fragenkatalog unterzogen wird, der es ermöglicht, die Empfindlichkeit des Trägers gegenüber dem charakteristischen Lichtstrom zu beurteilen,
   - einen Schritt des Sammelns der Antworten des Trägers auf den Fragenkatalog,

   wobei das Messen der repräsentativen Größe ausgehend von den Antworten des Trägers auf den Fragenkatalog ausgeführt wird

4. Verfahren nach einem der Ansprüche 1 bis 3, wobei der Schritt des Messens der für die Empfindlichkeit des Auges des Trägers gegenüber dem charakteristischen Lichtstrom repräsentativen Größe umfasst:

   - einen Schritt, bei dem der Träger dem charakteristischen Lichtstrom unterzogen wird, und
   - einen Schritt des Charakterisierens des charakteristischen Lichtstroms, wobei das Messen der repräsentativen Größe an dem dem charakteristischen Lichtstrom unterzogenen Träger ausgeführt wird.

5. Verfahren nach Anspruch 4, wobei der Schritt des Charakterisierens des charakteristischen Lichtstroms in dem Messen mindestens einer der folgenden Größen besteht:

   - räumliche Verteilung des charakteristischen Lichtstroms,
   - winklige Verteilung des charakteristischen Lichtstroms,
   - Spektrum des charakteristischen Lichtstroms,
   - Intensität des charakteristischen Lichtstroms.

6. Verfahren nach einem der Ansprüche 1 bis 5, wobei das mindestens eine bestimmte optische Merkmal des Filters in Folgendem besteht:

   - Absorptionsrate des Filters,
   - spektrale Antwort des Filters,

- räumliche Verteilung dieser Merkmale auf der ophthalmischen Linse.

7. Verfahren zur Bestimmung nach einem der Ansprüche 1 bis 6, umfassend ferner einen Schritt des Bewertens der Auswirkungen des charakteristischen Lichtstroms auf die Sehleistungen des Trägers, bei dem mindestens eine der folgenden Messungen an dem Träger ausgeführt wird:

- Sehschärfe,
- Kontrastempfindlichkeit,
- Sichtfeld,
- Farbwahrnehmung,
- Entfernungswahrnehmung,
- Pupillenbewegung,
- Pupillendurchmesser,
- Sehdiskomfort auf einer Diskomfortskala, und
- Erholungszeit nach Blendung.

8. Verfahren zur Bestimmung nach den Ansprüchen 1 und 7, wobei die für die Empfindlichkeit des Auges des Trägers gegenüber dem charakteristischen Lichtstrom repräsentative Größe in Abhängigkeit von dem bei verschiedenen Wellenlängen gemessenen Koeffizienten der intraokularen Streuung bestimmt wird und wobei die Absorptionsrate und/oder die spektrale Antwort des Filters in Abhängigkeit von dem Koeffizienten der intraokularen Streuung angepasst wird.

9. Verfahren nach einem der Ansprüche 1 bis 8, wobei die selektive Dämpfung des Filters proportional zu der für die Empfindlichkeit des Auges des Trägers gegenüber dem charakteristischen Lichtstrom repräsentativen Größe ist.

10. Verfahren nach einem der Ansprüche 1 bis 9, wobei das optische Merkmal des Filters auch in Abhängigkeit von einem Indikator zum Lichtstrom und/oder von dem Sehbedarf, dem der Träger bei seinen Aktivitäten ausgesetzt ist, bestimmt wird.

11. Verfahren zur Bestimmung nach Anspruch 1, wobei die für die Empfindlichkeit des Auges des Trägers gegenüber dem charakteristischen Lichtstrom repräsentative Größe in Abhängigkeit von der Dichte und/oder der Verteilung des Makulapigments bestimmt wird.

12. Verfahren nach Anspruch 11, wobei beim Schritt des Bestimmens des Filters:

entweder die spektrale Antwort des Filters als der Absorptionskurve des Makulapigments in Abhängigkeit von der Wellenlänge bestimmt wird;
oder die spektrale Antwort des Filters so bestimmt wird, dass das durch den Filter und das Auge gebildete Systeme eine spektrale Transmission aufweist, die der spektralen Transmission eines Referenzauges nahekommt.

13. Verfahren nach einem der Ansprüche 1 bis 12, wobei bei dem Schritt des Bestimmens die Absorptionsrate des Filters und/oder die spektrale Antwort des Filters so bestimmt wird, dass, wenn der Träger einem vorbestimmten Lichtstrom unterzogen wird, die von dem Auge des Trägers empfangene Netzhautbeleuchtungsstärke $E_{ret}$ bei mindestens einer Wellenlänge geringer als eine Netzhautbeleuchtungsstärkenschwelle ist, bei deren Überschreitung der Sehkomfort und/oder die Sehleistungen des Trägers beeinträchtigt sind.

14. Verfahren nach Anspruch 1, wobei, wenn die für die Empfindlichkeit des Auges des Trägers gegenüber dem Strom repräsentative Größe die Dichte des Makulapigments umfasst, die folgenden Regeln zur Bestimmung des Filters in Abhängigkeit von der Messung der Dichte des Makulapigments angewandt werden:

- wenn die Dichte des Makulapigments weniger als 0,2 beträgt, entspricht die spektrale Antwort des Filters der Absorptionskurve des Makulapigments in Abhängigkeit von der Wellenlänge, wobei der Filter bei einer Wellenlänge von 460 nm einen maximalen Absorptionskoeffizienten von 40 % aufweist,
- wenn die Dichte des Makulapigments mehr als 0,2 beträgt, entspricht die spektrale Antwort des Filters der Absorptionskurve $f(\lambda)$ des Makulapigments in Abhängigkeit von der Wellenlänge $\lambda$, wobei der Absorptionskoeffizient $A(\lambda)$ des Filters bei der Wellenlänge $\lambda$ dergestalt ist, dass: $A(\lambda) = (1-d)*f(\lambda)$.

15. Verfahren nach Anspruch 1, wobei die für die Empfindlichkeit des Auges des Trägers gegenüber dem Strom repräsentative Größe darüber hinaus mit der Netzhautbeleuchtungsstärke $E_{rét}(\lambda)$ in Abhängigkeit von der Wellenlänge verknüpft ist und es einen Schritt des Bestimmens der Komfortnetzhautbeleuchtungsstärke $E_{confort}(\lambda)$ des Trägers in Abhängigkeit von der Wellenlänge umfasst und, wenn die Netzhautbeleuchtungsstärke $E_{rét}$ größer als die Komfortnetzhautbeleuchtungsstärke $E_{confort}$ bei mindestens einer Mehrzahl von Wellenlängen ist, der Filter durch seine spektrale Antwort $F(\lambda)$ bestimmt wird, die dann gleich dem Produkt aus einer vorbestimmten Konstante $\alpha$ und dem Quotienten aus der Komfortnetzhautbeleuchtungsstärke $E_{confort}(\lambda)$ und der Netzhautbeleuchtungsstärke $E_{rét}(\lambda)$ des Trägers ohne Filter ist, d. h. $F(\lambda) = \alpha \times (E_{confort}(\lambda) / E_{rét}(\lambda))$.

## Claims

1. Method for determining a filter for an ophthalmic lens intended to be placed in front of the eye of a wearer, said filter being able to improve or to maintain the visual comfort and/or visual performance of said wearer,

    **characterized in that** it includes:

      - a step of measuring a quantity representative of a sensitivity of an eye or of both eyes of the wearer to a characteristic light flux, and
      - a step of determining at least one optical characteristic of said filter depending on the measured representative quantity with a view to manufacturing said filter or to programming said filter,

    **characterized in that** said quantity representative of the sensitivity of the eye of the wearer to the characteristic light flux is chosen from at least one of the following quantities:

      - the intraocular scattering coefficient of the eye of the wearer,
      - the density of the macular pigment of the eye of the wearer.

2. Method according to Claim 1, wherein said quantity representative of the sensitivity of the eye of the wearer to the characteristic light flux is in addition related to the expressed or measured threshold of variation in visual comfort and/or visual performance.

3. Method according to Claim 2, wherein said step of measuring the quantity representative of the sensitivity of the eye of the wearer to the characteristic light flux comprises:

      - a step of subjecting the wearer to a questionnaire allowing the sensitivity of the wearer to said characteristic light flux to be assessed,
      - a step of collecting the responses of the wearer to said questionnaire,

    the measurement of said representative quantity being carried out on the basis of said responses of the wearer to the questionnaire.

4. Method according to one of Claims 1 to 3, wherein said step of measuring the quantity representative of the sensitivity of the eye of the wearer to the characteristic light flux comprises:

      - a step of subjecting the wearer to said characteristic light flux, and
      - a step of characterizing said characteristic light flux, the measurement of said representative quantity being carried out on the wearer subjected to said characteristic light flux.

5. Method according to Claim 4, wherein the step of characterizing said characteristic light flux consists in measuring at least one of the following quantities:

      - the spatial distribution of said characteristic light flux,
      - the angular distribution of said characteristic light flux,
      - the spectrum of said characteristic light flux,
      - the intensity of said characteristic light flux.

6. Method according to one of Claims 1 to 5, wherein said at least one determined optical characteristic of the filter consists of:

- the degree of absorption of said filter,
- the spectral response of said filter,
- the spatial distribution of these characteristics over said ophthalmic lens.

7.  Determining method according to one of Claims 1 to 6, furthermore including a step of evaluating the impact of said characteristic light flux on the visual performance of the wearer, in which step at least one of the following measurements is carried out on the wearer:

- visual acuity,
- contrast sensitivity,
- visual field,
- colour perception,
- distance perception,
- eyelid movement,
- pupil diameter,
- visual discomfort on a discomfort scale, and
- recovery time post-glare.

8.  Determining method according to Claims 1 and 7, wherein the quantity representative of the sensitivity to the characteristic light flux of the eye of the wearer is determined depending on the intraocular scattering coefficient measured at various wavelengths and wherein the degree of absorption and/or the spectral response of the filter is adjusted depending on said intraocular scattering coefficient.

9.  Method according to one of Claims 1 to 8, wherein the selective attenuation of the filter is proportional to the quantity representative of the sensitivity to the characteristic light flux of the eye of the wearer.

10. Method according to one of Claims 1 to 9, wherein said optical characteristic of the filter is also determined depending on an indicator of the light flux and/or visual need to which the wearer will be subject in his activities.

11. Determining method according to Claim 1, wherein the quantity representative of the sensitivity of the eye of the wearer to the characteristic light flux is determined depending on the density and/or distribution of the macular pigment.

12. Method according to Claim 11, wherein, in the step of determining the filter:

either the spectral response of the filter is determined as being in accordance with the absorption curve of the macular pigment as a function of wavelength;
or the spectral response of the filter is determined so that the system formed by the filter and the eye of the wearer has a spectral transmittance close to the spectral transmittance of a reference eye.

13. Method according to one of Claims 1 to 12, wherein, in said determining step, the degree of absorption of the filter and/or the spectral response of the filter is determined, so that, when the wearer is subjected to a predetermined light flux, the retinal illuminance $E_{ret}$ received by the eye of the wearer is lower, at at least one wavelength, than a retinal illuminance threshold beyond which the visual comfort and/or the visual performance of said wearer is/are degraded.

14. Method according to Claim 1, wherein, when the quantity representative of the sensitivity of the eye of the wearer to the flux includes the density of the macular pigment, the following rules are applied to determine the filter depending on the result of the measurement of the density of the macular pigment:

- if the density of the macular pigment is lower than 0.2: the spectral response of the filter is in accordance with the absorption curve of the macular pigment as a function of wavelength, said filter having at a wavelength of 460 nanometres a maximum absorption coefficient equal to 40%,
- if the density d of the macular pigment is higher than 0.2: the spectral response of the filter is in accordance with the absorption curve $f(\lambda)$ of the macular pigment as a function of wavelength $\lambda$, the absorption coefficient $A(\lambda)$ of said filter at the wavelength $\lambda$ being such that: $A(\lambda) = (1-d)*f(\lambda)$.

15. Method according to Claim 1, wherein the quantity representative of the sensitivity of the eye of the wearer to the flux is in addition related to the retinal illuminance $E_{ret}(\lambda)$ as a function of wavelength and wherein the method includes a step of determining the comfortable retinal illuminance $E_{comfort}(\lambda)$ of said wearer as a function of wavelength and, when said retinal illuminance $E_{ret}$ is higher than said comfortable retinal illuminance $E_{comfort}$ at at least a plurality of wavelengths, the filter is determined by its spectral response $F(\lambda)$ which is then equal to the product of a predetermined constant $\alpha$ and the ratio of the comfortable retinal illuminance $E_{comfort}(\lambda)$ to the retinal illuminance $E_{ret}(\lambda)$ of said wearer without filter, i.e. $F(\lambda) = \alpha \times (E_{comfort}(\lambda) / E_{ret}(\lambda))$.

# Fig.1

# Fig.2

## 2(a)

## 2(b)

# Fig.3

Fig.4

Fig.5

Fig.6

**Fig.7**

Absorption(%)

40%

71

460nm

0

450nm    500nm    λ(nm)

**Fig.8**

dPM

(a)

1.4
1.2
1.0
0.8
0.6
0.4
0.2
0.0

81

0  1  2  3  4  5  6  7
ε(°)

dPM

(b)

1.4
1.2
1.0
0.8
0.6
0.4
0.2
0.0

82

0  1  2  3  4  5  6  7
ε(°)

**Fig.9**

91

92

921      922      923

93

931      932      933

**Fig.10**

Absorption(%)

40%

460nm

F3
F2
F1

0

450nm    500nm    λ(nm)

**Fig.11**

(a)

(b)

(c)

**Fig.12**

12(a)

12(b)

12(c)

12(d)

**Fig.13**

**Fig.14**

**Fig.15**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2014079574 A1

- WO 2001057583 A


**Littérature non-brevet citée dans la description**

- **ROSENBLUM et al.** Spectral filters in low-vision correction. *Ophthalmic Physiol. Opt.*, 2000, vol. 20 (4), 335-341
- BORISH'S CLINICAL REFRACTION. Butterworth-Heinemann, 27 October 2006
- **SIDOROVA et al.** Functional acuity contrast sensitivity assessment in young and middle age healthy persons at the day time with and without glare. *Acta Medica Lituanica*, 2014, vol. 21 (1)
- **MURRAY et al.** The ocular stress monitor: a new device for measuring discomfort glare. *Lighting Research and Technology*, September 2002, vol. 34, 240
- **ALEXANDRIDIS E.** The Pupil. Springer, 1985
- **MAINSTER et al.** Glare's causes, consequences, and clinical challenges after a century of ophthalmic study. *Am. J. Ophthalmol.*, 2012, vol. 153 (4), 587-593
- **SHIEBER**. Age and Glare Recovery Time for Low-Contrast Stimuli Effect of glare on reaction time for peripheral vision at mesopic adaptation. *Proceedings of the Human Factors and Ergonomics Society Annual Meeting*, October 1994, vol. 38, 496-499

- **GELLATLY** ; **WEINTRAUB**. *User reconfigurations of the de boer rating for discomfort glare*, 1990
- **DAMELINCOURT et al.** Éclairage d'intérieur et ambiances visuelles. *Lavoisier*, 2010, ISBN 2743019115
- **VAN DEN BERGH et al.** History of ocular straylight measurement: A review. *Z. Med. Phys.*, 2013, vol. 23 (1), 6-20
- **WOLF-SCHNURRBUSCH et al.** Ethnic differences in macular pigment density and distribution. *Invest. Ophthalmol. Vis. Sci.*, 2007, vol. 48 (8), 3783-3787
- **BERNSTEIN PS**. The value of measurement of macular carotenoid pigment optical densities and distributions in age-related macular degeneration and other retinal disorders. *Vision Res*, 2010
- **BEATTY S. et al.** *Invest. Ophthalmol. Vis. Sci.*, 2001, vol. 42, 439-446
- **STRINGHAM et al.** Macular pigment and visual performance under glare conditions. *Optom. Vis. Sci.*, 2008, vol. 85 (2), 82-88
- **CREUZOT-GARCHER et al.** Comparison of Two Methods to Measure Macular Pigment Optical Density in Healthy Subjects. *Retina 2014 IOVS*, May 2014, vol. 55 (5), 2941-2947